# EUROPEAN PATENT APPLICATION

(11) **EP 2 039 633 A2**
(43) Date of publication of application: **25.03.2009**
(21) Application number: 08075764.4
(22) Date of filing: 17.09.2008
(51) Int. Cl.: B65H 7/12, G01B 17/02

(54) **Sheet overlap detection apparatus and sheet overlap detection method**

(30) Priority: 19.09.2007 JP 2007242919
(71) Applicant: Komori Corporation, Tokyo 1308666 (JP)
(72) Inventor: Msato Sawada c/o Tsukuba Plant, Komori Corporation, Ibaraki (JP)
(74) Representative: Wenzel & Kalkoff

(57) **Abstract**

In a sheet overlap detection apparatus, an amplification factor control unit changes the amplification factor of a second amplifier (AMP2) which amplifies the output from a first amplifier (AMP1) which receives the output from an ultrasonic receiver (2). A first overlap detection monitor output decision unit decides the output from the second amplifier (AMP2) as a sheet overlap detection monitor output when the amplification factor of the second amplifier is adjusted, and the output value of the second amplifier has become almost equal to a first set value while one sheet is sandwiched between an ultrasonic transmitter (1) and the ultrasonic receiver (2). A second overlap detection monitor output decision unit decides the output from the third amplifier (AMP3) as a sheet overlap detection monitor output when the amplification factor of the second amplifier (AMP2) is adjusted, and the output value of the second amplifier (AMP2) has not become almost equal to the first set value, but the output value of the third amplifier (AMP3) has become almost equal to a second set value while one sheet is sandwiched between the ultrasonic transmitter (1) and the ultrasonic receiver (2). An overlap detection unit detects, based on the output from the second or third amplifier, overlap of sheets which pass between the ultrasonic transmitter and the ultrasonic receiver.

## Description

### Background of the Invention

The present invention relates to a sheet overlap detection apparatus and sheet overlap detection method using an ultrasonic wave.

Conventionally, when feeding paper sheets to a sheet-fed offset printing press, overlap of the paper sheets to be fed is detected. For example, when feeding paper sheets from a feeder to a sheet-fed offset printing press (to be simply referred to as a printing press hereinafter), the leading edges of the paper sheets are caused to abut against a stopper called a front lay provided at the printing press-side front end of a feeding table, and the paper sheets are then fed to the printing press. At this time, overlap of the fed paper sheets is detected for the purpose of preventing overlap of two or more paper sheets.

The paper sheet overlap detection is normally done using a projector and a photodetector. For example, a projector is arranged on the lower surface side of the feeding table near the front lay. A through-hole is formed at a predetermined portion of the feeding table so as to face the light-emitting unit of the projector. A photodetector is arranged on the upper surface side of the feeding table so as to face the through-hole. That is, the projector projects light in the thickness direction of a paper sheet to be fed. The photodetector receives the light transmitted through the fed paper sheet. The light is converted into an electrical signal. An output level corresponding to the received light amount that is obtained as the electrical signal is compared with a preset determination level. Overlap of the fed paper sheets is detected based on the comparison result (Japanese Patent Laid-Open Nos. 2-178145 and 63-290746).

Recently, an overlap detection apparatus using an ultrasonic wave has been proposed to deal with paper sheets in a wide range (Japanese Patent Laid-Open Nos. 2002-338086 and 2002-338087). The overlap detection apparatus using an ultrasonic wave comprises an ultrasonic transmitter which transmits an ultrasonic wave, and an ultrasonic receiver which receives the ultrasonic wave from the ultrasonic transmitter. On the basis of the reception level of the ultrasonic wave received by the ultrasonic receiver, the apparatus detects overlap of fed paper sheets which pass between the ultrasonic transmitter and the ultrasonic receiver.

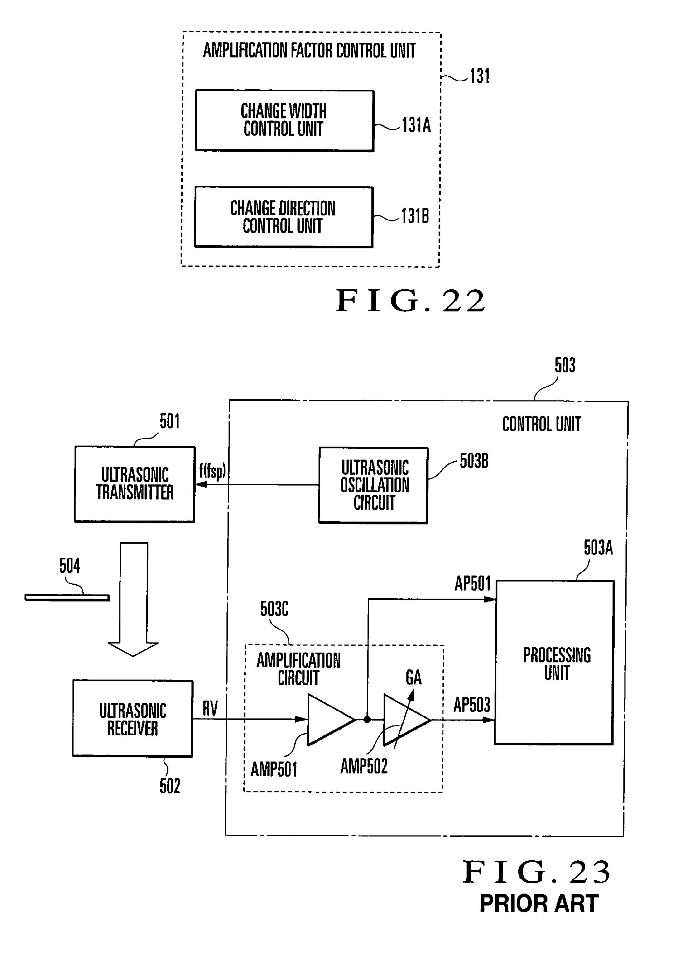

Fig. 23 shows an example of the conventional overlap detection apparatus using an ultrasonic wave. The overlap detection apparatus comprises an ultrasonic transmitter 501, an ultrasonic receiver 502, and a control unit 503 attached to the ultrasonic transmitter 501 and the ultrasonic receiver 502. The control unit 503 comprises a processing unit 503A, ultrasonic oscillation circuit 503B, and amplification circuit 503C. The amplification circuit 503C comprises a first amplifier (fixed amplifier) AMP501 and a second amplifier (variable amplifier) AMP502.

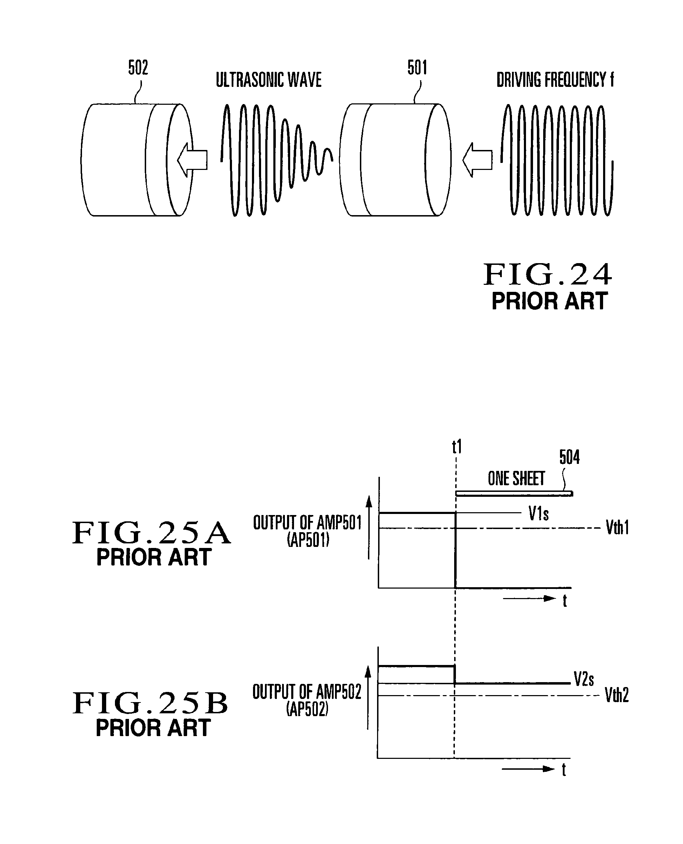

The ultrasonic oscillation circuit 503B supplies a driving frequency f to the ultrasonic transmitter 501. Upon receiving the driving frequency f from the ultrasonic oscillation circuit 503B, the ultrasonic transmitter 501 emits an ultrasonic wave of output level determined by the driving frequency f (Fig. 24). The ultrasonic receiver 502 receives the ultrasonic wave emitted from the ultrasonic transmitter 501 and sends a reception output RV corresponding to the ultrasonic wave reception amount to the amplification circuit 503C. The amplification circuit 503C amplifies the reception output RV from the ultrasonic receiver 502 and sends, to the processing unit 503A, output values AP501 and AP502 representing the ultrasonic wave reception level in the ultrasonic receiver 502. Based on the output values AP501 and AP502 from the amplification circuit 503C, the processing unit 503A detects overlap of fed paper sheets 504 which pass between the ultrasonic transmitter 501 and the ultrasonic receiver 502.

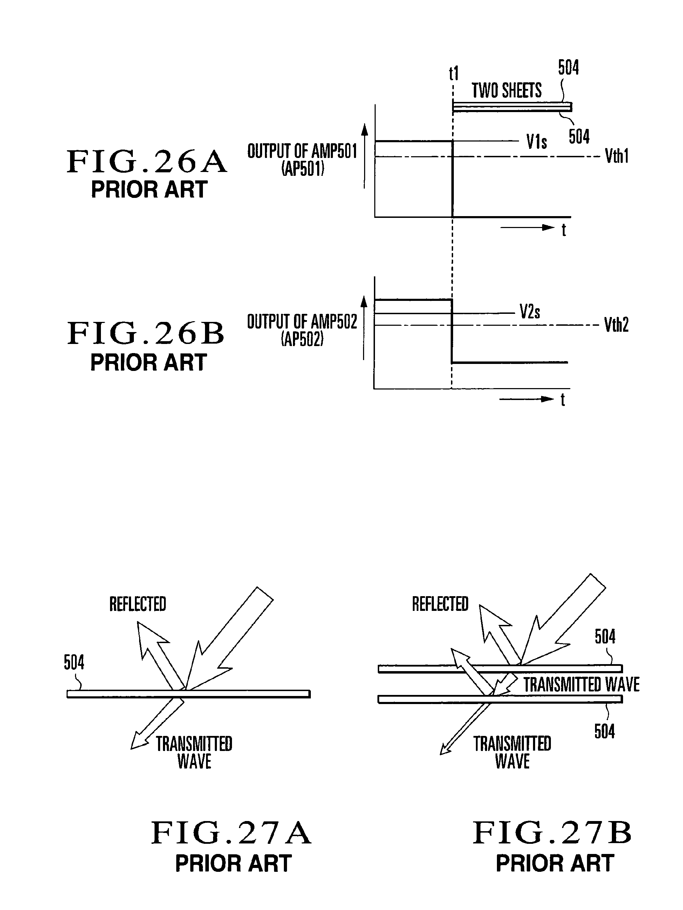

Figs. 25A and 25B show the changes of the output values AP501 and AP502 from the amplification circuit 503C when one paper sheet 504 is fed. Figs. 26A and 26B show the changes of the output values AP501 and AP502 from the amplification circuit 503C when two paper sheets 504 are fed. The output value AP501 of the amplification circuit 503C is defined to be a set value V1s when no fed paper sheet 504 is sandwiched between the ultrasonic transmitter 501 and the ultrasonic receiver 502. The output value AP502 of the amplification circuit 503C is defined to be a set value V2s when one fed paper sheet 504 is sandwiched between the ultrasonic transmitter 501 and the ultrasonic receiver 502. Values about 80% of the set values V1s and V2s are set as threshold values Vth1 and Vth2.

The fed paper sheet 504 which is inserted between the ultrasonic transmitter 501 and the ultrasonic receiver 502 reflects the ultrasonic wave. Hence, the ultrasonic wave reception amount in the ultrasonic receiver 502 decreases. In this case, when one paper sheet 504 is inserted between the ultrasonic transmitter 501 and the ultrasonic receiver 502, the attenuation amount of the ultrasonic wave reception amount in the ultrasonic receiver 502 is small (Fig. 27A). The output value AP501 of the amplification circuit 503C is smaller than the threshold value Vth1 (Fig. 25A: point t1). The output value AP502 of the amplification circuit 503C keeps the threshold value Vth2 or more (Fig. 25B: point t1).

To the contrary, when two paper sheets 504 are inserted between the ultrasonic transmitter 501 and the ultrasonic receiver 502, the attenuation amount of the ultrasonic wave reception amount in the ultrasonic receiver 502 increases (Fig. 27B). The output value AP502 of the amplification circuit 503C is smaller than the threshold value Vth2 (Fig. 26B: point t1). The processing unit 503A monitors the output values AP501 and AP502 from the amplification circuit 503C and detects overlap of the fed paper sheets 504 when the output value AP501 is smaller than the threshold value Vth1, and the output value AP502 is also smaller than the threshold value Vth2.

Assume that the fed paper sheets 504 whose overlap is to be detected by the overlap detection apparatus are changed, and the output value AP502 of the amplification circuit 503C is smaller than the threshold value Vth2 even for one fed paper sheet 504. In such a case, an amplification factor GA of the amplifier AMP502 is raised while keeping the fed paper sheet 504 sandwiched between the ultrasonic transmitter 501 and the ultrasonic receiver 502, thereby adjusting the output value AP502 to the set value V2s. This allows overlap detection of the changed fed paper sheets 504 in the same way as described above.

According to the above-described overlap detection apparatus, however, the amplification factor GA of the amplifier AMP502 in the amplification circuit 503C is limited. This makes it impossible to detect specialty paper such as microflute having a high ultrasonic wave attenuation factor, and degrades the detection accuracy.

### Summary of the Invention

The present invention has been made to solve the above-described problems, and has as its object to provide a sheet overlap detection apparatus and sheet overlap detection method capable of accurately detecting overlap of even specialty paper having a high ultrasonic wave attenuation factor.

In order to achieve the above object, according to the present invention, there is provided a sheet overlap detection apparatus comprising an ultrasonic transmitter which transmits an ultrasonic wave, an ultrasonic receiver which receives the ultrasonic wave from the ultrasonic transmitter, a first amplifier which amplifies an output from the ultrasonic receiver, a second amplifier which is configured to freely change an amplification factor and amplifies an output from the first amplifier, a third amplifier which amplifies an output from the second amplifier, amplification factor control means for changing the amplification factor of the second amplifier, first overlap detection monitor output decision means for deciding the output from the second amplifier as a sheet overlap detection monitor output when the amplification factor control means adjusts the amplification factor of the second amplifier, and an output value of the second amplifier has become almost equal to a first set value while one sheet is sandwiched between the ultrasonic transmitter and the ultrasonic receiver, second overlap detection monitor output decision means for deciding an output from the third amplifier as a sheet overlap detection monitor output when the amplification factor control means adjusts the amplification factor of the second amplifier, and the output value of the second amplifier has not become almost equal to the first set value, but an output value of the third amplifier has become almost equal to a second set value while one sheet is sandwiched between the ultrasonic transmitter and the ultrasonic receiver, and overlap detection means for detecting, based on the output from one of the second amplifier and the third amplifier, overlap of sheets which pass between the ultrasonic transmitter and the ultrasonic receiver, the output being decided as the overlap detection monitor output by one of the first overlap detection monitor output decision means and the second overlap detection monitor output decision means.

There is also provided a sheet overlap detection method comprising the steps of causing an ultrasonic transmitter to transmit an ultrasonic wave, causing an ultrasonic receiver to receive the ultrasonic wave from the ultrasonic transmitter, causing a first amplifier to amplify an output from the ultrasonic receiver, causing a second amplifier to amplify an output from the first amplifier, causing a third amplifier to amplify an output from the second amplifier, adjusting an amplification factor of the second amplifier, deciding the output from the second amplifier as a sheet overlap detection monitor output when the amplification factor of the second amplifier is adjusted, and an output value of the second amplifier has become almost equal to a first set value while one sheet is sandwiched between the ultrasonic transmitter and the ultrasonic receiver, deciding an output from the third amplifier as a sheet overlap detection monitor output when the amplification factor of the second amplifier is adjusted, and the output value of the second amplifier has not become almost equal to the first set value, but an output value of the third amplifier has become almost equal to a second set value while one sheet is sandwiched between the ultrasonic transmitter and the ultrasonic receiver, and detecting, based on the output from one of the second amplifier and the third amplifier, overlap of sheets which pass between the ultrasonic transmitter and the ultrasonic receiver, the output being decided as the overlap detection monitor output.

### Brief Description of the Drawings

Fig. 1 is a block diagram showing an overlap detection apparatus according to the first embodiment of the present invention;
Figs. 2A and 2B are flowcharts for explaining an overlap detection monitor output & amplification factor decision processing operation executed by the processing unit of the overlap detection apparatus shown in Fig. 1;
Figs. 3A to 3C are timing charts for explaining an example of the overlap detection monitor output & gain decision process of the overlap detection apparatus shown in Fig. 1, in which the output from a second amplifier is decided as an overlap detection monitor output;
Figs. 4A to 4D are timing charts for explaining an example of the overlap detection monitor output & gain decision process of the overlap detection apparatus shown in Fig. 1, in which the output from a third amplifier is decided as an overlap detection monitor output;
Fig. 5 is a block diagram of an overlap detection monitor output & amplification factor decision unit;
Fig. 6 is a block diagram showing an overlap detection apparatus according to the second embodiment of the present invention;
Fig. 7 is a view showing the arrangement of memories in the overlap detection apparatus shown in Fig. 6;
Fig. 8 is a block diagram showing the arrangement of a printing press control apparatus connected to the overlap detection apparatus shown in Fig. 6;
Figs. 9A to 90 are flowcharts illustrating a processing operation according to an overlap detection program executed by the CPU of the overlap detection apparatus shown in Fig. 6;
Figs. 10A to 10C are flowcharts illustrating a processing operation executed by the CPU of the printing press control apparatus shown in Fig. 8;
Figs. 11A to 11C are timing charts for explaining a first example of the overlap detection monitor output & gain decision process of the overlap detection apparatus shown in Fig. 6, in which the output from a second amplifier is decided as an overlap detection monitor output;
Figs. 12A to 12C are timing charts for explaining a second example of the overlap detection monitor output & gain decision process of the overlap detection apparatus shown in Fig. 6, in which the output from the second amplifier is decided as an overlap detection monitor output;
Figs. 13A to 13C are timing charts for explaining a third example of the overlap detection monitor output & gain decision process of the overlap detection apparatus shown in Fig. 6, in which the output from the second amplifier is decided as an overlap detection monitor output;
Figs. 14A to 14C are timing charts for explaining a fourth example of the overlap detection monitor output & gain decision process of the overlap detection apparatus shown in Fig. 6, in which the output from the second amplifier is decided as an overlap detection monitor output;
Figs. 15A to 15D are timing charts for explaining a first example of the overlap detection monitor output & gain decision process of the overlap detection apparatus shown in Fig. 6, in which the output from a third amplifier is decided as an overlap detection monitor output;
Figs. 16A to 16D are timing charts for explaining a second example of the overlap detection monitor output & gain decision process of the overlap detection apparatus shown in Fig. 6, in which the output from the third amplifier is decided as an overlap detection monitor output;
Figs. 17A to 17D are timing charts for explaining a third example of the overlap detection monitor output & gain decision process of the overlap detection apparatus shown in Fig. 6, in which the output from the third amplifier is decided as an overlap detection monitor output;
Figs. 18A to 18D are timing charts for explaining a fourth example of the overlap detection monitor output & gain decision process of the overlap detection apparatus shown in Fig. 6, in which the output from the third amplifier is decided as an overlap detection monitor output;
Figs. 19A and 19B are graphs showing the changes of the output value of a first amplifier when a driving frequency to an ultrasonic transmitter is changed stepwise;
Fig. 20 is a block diagram of functions implemented by the CPU of the overlap detection apparatus shown in Fig. 6;
Fig. 21 is a block diagram of an overlap detection monitor output & amplification factor decision unit;
Fig. 22 is a block diagram of an amplification factor control unit;
Fig. 23 is a block diagram showing an example of a conventional overlap detection apparatus using an ultrasonic wave;
Fig. 24 is a view showing a state in which an ultrasonic transmitter emits an ultrasonic wave to an ultrasonic receiver;
Figs. 25A and 25B are timing charts showing the changes of output values of an amplification circuit when one paper sheet is fed;
Figs. 26A and 26B are timing charts showing the changes of the output values of the amplification circuit when two paper sheets are fed; and
Figs. 27A and 27B are views showing the changes of an ultrasonic wave reception amount for one fed paper sheet and two fed paper sheets.

### Description of the Preferred Embodiments

The present invention will now be described in detail with reference to the accompanying drawings.

### [First Embodiment]

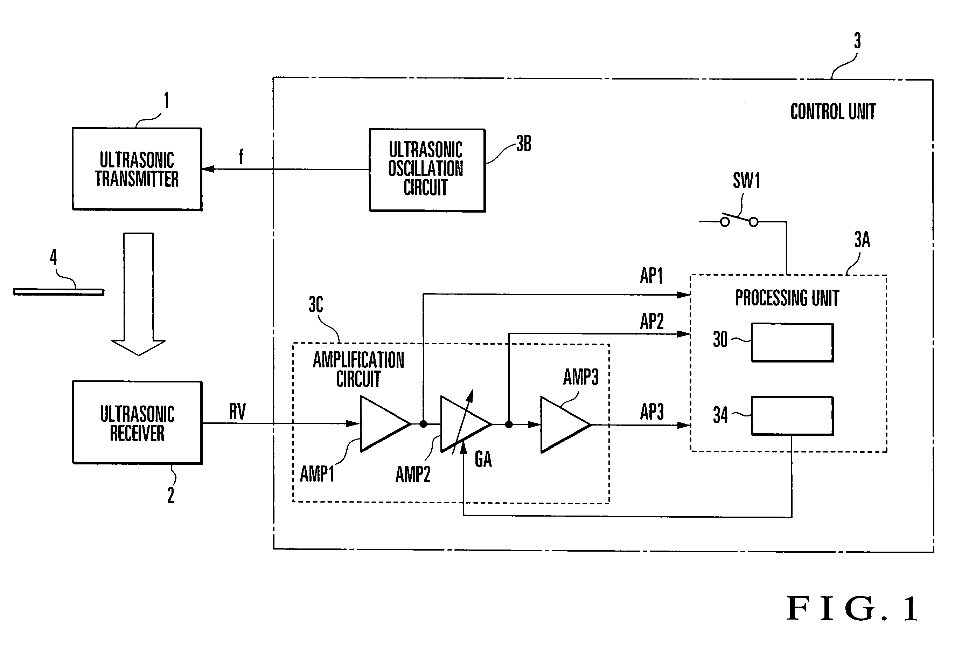

Fig. 1 shows an overlap detection apparatus according to the first embodiment of the present invention. The overlap detection apparatus comprises an ultrasonic transmitter (ultrasonic transmission sensor) 1 which transmits an ultrasonic wave, an ultrasonic receiver (ultrasonic reception sensor) 2 which receives the ultrasonic wave from the ultrasonic transmitter 1, and a control unit 3 attached to the ultrasonic transmitter 1 and the ultrasonic receiver 2.

The control unit 3 comprises a processing unit 3A, ultrasonic oscillation circuit 3B, and amplification circuit 3C. The amplification circuit 3C comprises a first amplifier AMP1 which amplifies the output from the ultrasonic receiver 2, a second amplifier AMP2 which amplifies the output from the first amplifier AMP1, and a third amplifier AMP3 which amplifies the output from the second amplifier AMP2. The first and third amplifiers AMP1 and AMP3 are fixed amplifiers having fixed amplification factors. The second amplifier AMP2 is a variable amplifier capable of freely changing the amplification factor.

The ultrasonic oscillation circuit 3B supplies a driving frequency f to the ultrasonic transmitter 1. Upon receiving the driving frequency f from the ultrasonic oscillation circuit 3B, the ultrasonic transmitter 1 emits an ultrasonic wave of output level determined by the driving frequency f. The ultrasonic receiver 2 receives the ultrasonic wave emitted from the ultrasonic transmitter 1 and sends a reception output RV corresponding to the ultrasonic wave reception amount to the amplification circuit 3C. The amplification circuit 3C amplifies the reception output RV from the ultrasonic receiver 2 and sends, to the processing unit 3A, output values AP1, AP2, and AP3 representing the ultrasonic wave reception levels in the ultrasonic receiver 2. Based on the output values AP1, AP2, and AP3 from the amplification circuit 3C, the processing unit 3A detects overlap of fed paper sheets 4 which pass between the ultrasonic transmitter 1 and the ultrasonic receiver 2.

In the first embodiment, the amplification circuit 3C includes the third amplifier AMP3. The third amplifier AMP3 is connected to the output of the second amplifier AMP2. The output value AP3 from the third amplifier AMP3 is supplied to the processing unit 3A. The processing unit 3A includes an overlap detection monitor output & amplification factor decision unit 30. The overlap detection monitor output & amplification factor decision unit 30 decides one of the output value AP2 of the second amplifier AMP2 and the output value AP3 of the third amplifier AMP3 as an overlap detection monitor output and also decides an overlap detection amplification factor GA of the second amplifier AMP2.

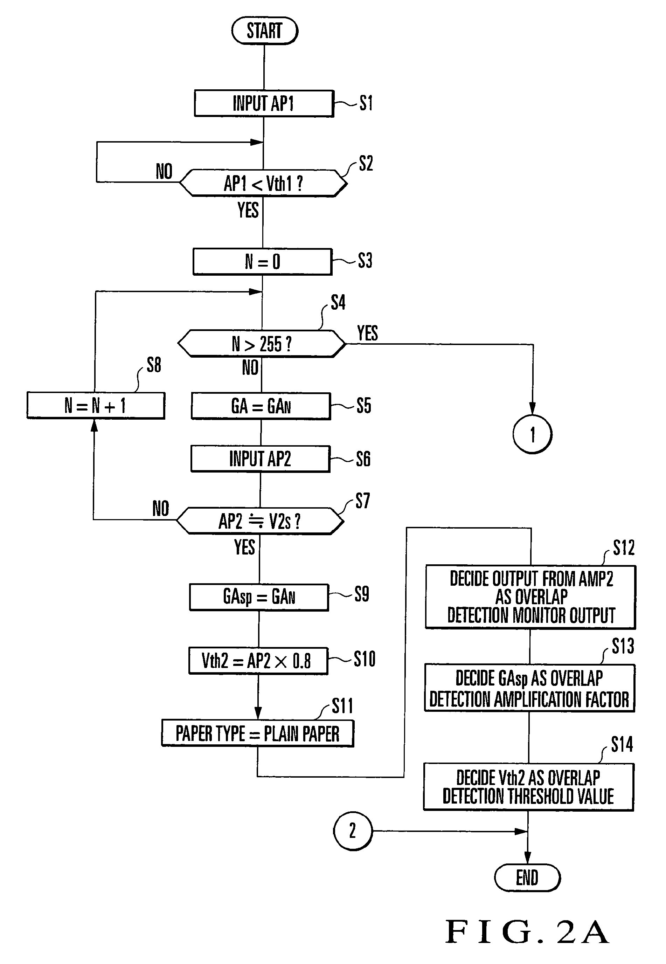

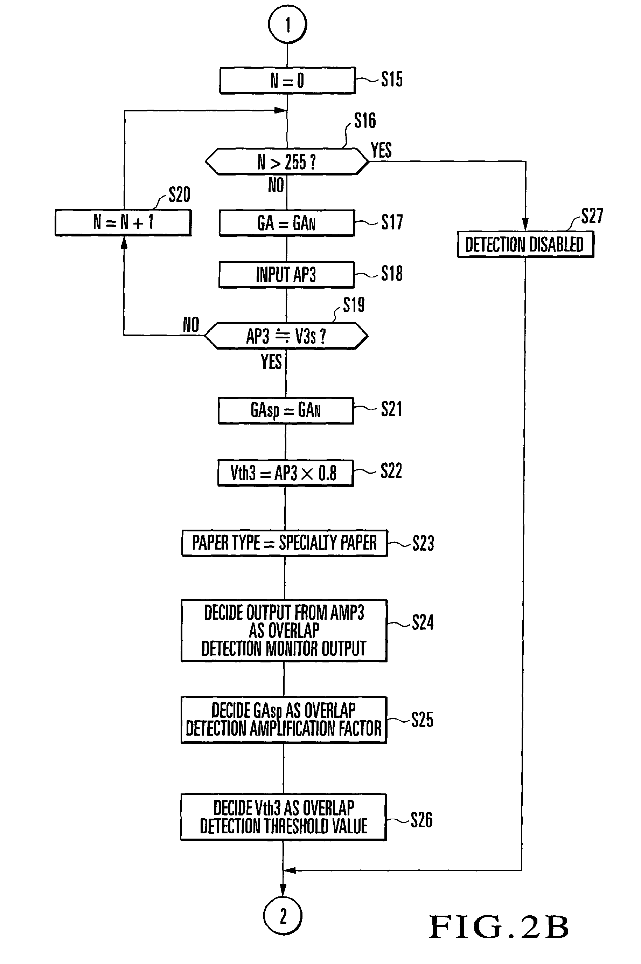

Figs. 2A and 2B show the overlap detection monitor output & amplification factor decision processing operation of the overlap detection monitor output & amplification factor decision unit 30 in the processing unit 3A. In this embodiment, the overlap detection monitor output & amplification factor decision unit 30 is implemented as a processing operation of a CPU according to a program stored in a memory of the processing unit 3A. The processing unit 3A has a switch SW1 to instruct the overlap detection monitor output & amplification factor decision processing operation. The ultrasonic transmitter 1 is emitting an ultrasonic wave upon receiving the driving frequency f from the ultrasonic oscillation circuit 3B. Additionally, one paper sheet 4 is fed between the ultrasonic receiver 2 and the ultrasonic transmitter 1 which is emitting the ultrasonic wave.

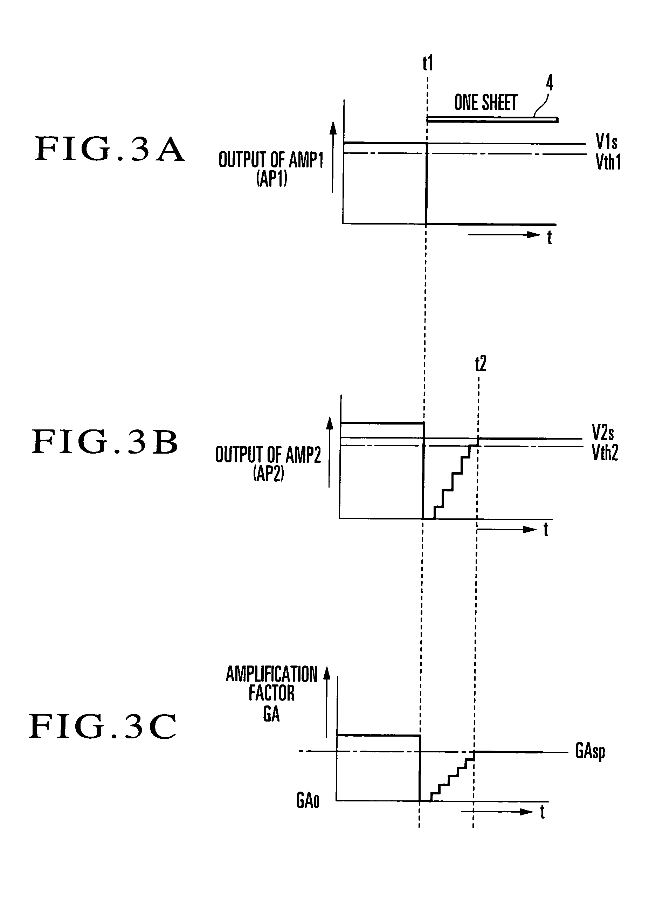

When the switch SW1 is turned on, the processing unit 3A receives the output value AP1 from the first amplifier AMP1 (Fig. 2A: step S1) and compares it with a threshold value Vth1 (step S2). If the output value AP1 of the first amplifier AMP1 is smaller than the threshold value Vth1 (YES in step S2, Fig. 3A: point t1), it is determined that one fed paper sheet 4 is sandwiched between the ultrasonic transmitter 1 and the ultrasonic receiver 2.

Upon determining that one fed paper sheet 4 is sandwiched between the ultrasonic transmitter 1 and the ultrasonic receiver 2 (YES in step S2), the processing unit 3A sets a count value N to 0 (step S3). The processing unit confirms that the count value N does not satisfy N > 255 (NO in step S4) and sets the amplification factor GA of the second amplifier AMP2 to GA₀ (minimum value) (step S5, Fig. 3C: point t1).

The processing unit receives the output value AP2 from the second amplifier AMP2 (step S6, Fig. 3B: point t1) and compares it with a set value V2s (V2s = 4.5 V) (step S7). In this case, the output value AP2 does not satisfy AP2 ≈ V2s (NO in step S7). Hence, the processing unit sets N = N + 1 = 1 (step S8) and raises the amplification factor GA of the second amplifier AMP2 by one step to GA₁ (step S5). The amplification factor GA of the second amplifier AMP2 is raised stepwise by repeating the operation (see Fig. 3C).

### [Plain Paper]

During the increment of the amplification factor GA, if AP2 ≈ V2s is satisfied before N > 255 (YES in step S7, Fig. 3B: point t2), i.e., if the amplification factor GA of the second amplifier AMP2 is raised stepwise from GA₀ to GA₂₅₅, and the output value AP2 of the second amplifier AMP2 has become almost equal to the set value V2s halfway, an amplification factor GA_{N} at that time is set to GAsp (step S9). Additionally, the processing unit multiplies the output value AP2 of the second amplifier AMP2 at that time by 0.8 to obtain a threshold value Vth2 (Vth2 = AP2 x 0.8) (step S10).

The processing unit sets the paper type to plain paper (step S11), decides the output from the second amplifier AMP2 as the overlap detection monitor output (step S12), decides GAsp as the overlap detection amplification factor (step S13), and decides the threshold value Vth2 as the overlap detection threshold value (step S14).

### [Specialty Paper]

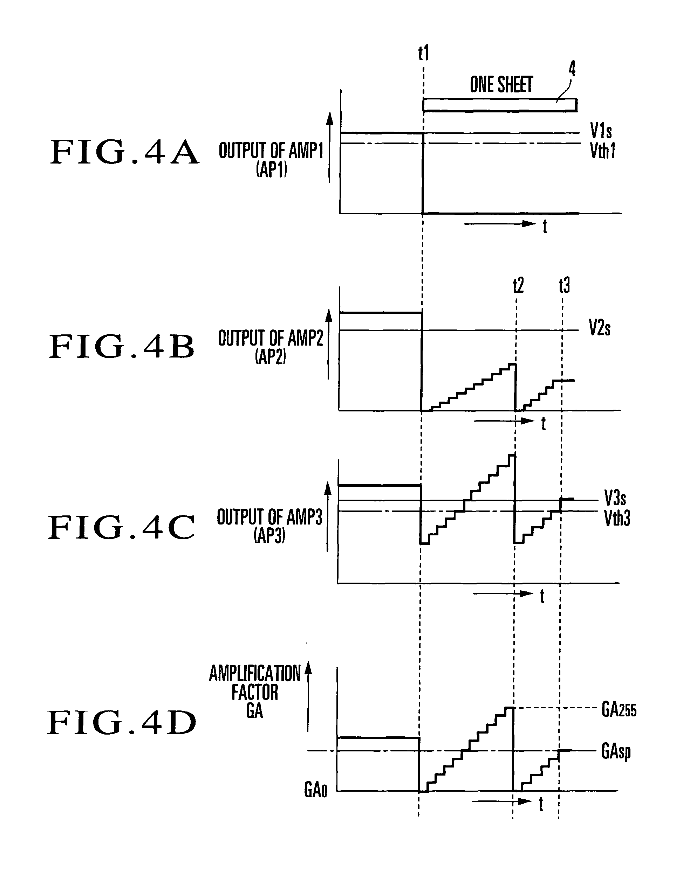

If AP2 ≈ V2s does not hold even when the amplification factor GA of the second amplifier AMP2 has reached GA₂₅₅ (Fig. 4D: point t2), N > 255 is satisfied by the next "N = N + 1" (YES in step S4). The process advances to step S15 (Fig. 2B) to set the count value N to 0. The processing unit confirms that the count value N does not satisfy N > 255 (NO in step S16) and sets the amplification factor GA of the second amplifier AMP2 to GA₀ (minimum value) (step S17, Fig. 4D: point t2).

The processing unit receives the output value AP3 from the third amplifier AMP3 (step S18, Fig. 4C: point t2) and compares it with a set value V3s (V3s = 4.5 V) (step S19). In this case, the output value AP3 does not satisfy AP3 ≈ V3s (NO in step S19). Hence, the processing unit sets N = N + 1 = 1 (step S20) and raises the amplification factor GA of the second amplifier AMP2 by one step to GA₁ (step S17). The amplification factor GA of the second amplifier AMP2 is raised stepwise by repeating the operation (see Fig. 4D).

During the increment of the amplification factor GA, if AP3 ≈ V3s is satisfied before N > 255 (YES in step S19, Fig. 4C: point t3), i.e., if the amplification factor GA of the second amplifier AMP2 is raised stepwise from GA₀ to GA_{255,} and the output value AP3 of the third amplifier AMP3 has become almost equal to the set value V3s halfway, the amplification factor GA_{N} at that time is set to GAsp (step S21). Additionally, the processing unit multiplies the output value AP3 of the third amplifier AMP3 at that time by 0.8 to obtain a threshold value Vth3 (Vth3 = AP3 × 0.8) (step S22).

The processing unit sets the paper type to specialty paper (step S23), decides the output from the third amplifier AMP3 as the overlap detection monitor output (step S24), decides GAsp as the overlap detection amplification factor (step S25), and decides the threshold value Vth3 as the overlap detection threshold value (step S26).

If AP3 ≈ V3s does not hold even when the amplification factor GA of the second amplifier AMP2 has reached GA₂₅₅, N > 255 is satisfied by the next "N = N + 1" (YES in step S16). The process advances to step S27 to determine that detection is disabled. That is, if the output value AP3 of the third amplifier AMP3 is not equal to the set value V3s, either, the processing unit determines that overlap detection at an appropriate accuracy is disabled, and displays, e.g., an error message.

In this embodiment, for plain paper, the output from the second amplifier AMP2 is decided as the overlap detection monitor output. For specialty paper such as microflute having a high ultrasonic wave attenuation factor, the output from the third amplifier AMP3 is decided as the overlap detection monitor output. This makes it possible to accurately detect overlap of paper sheets in a wide range including specialty paper.

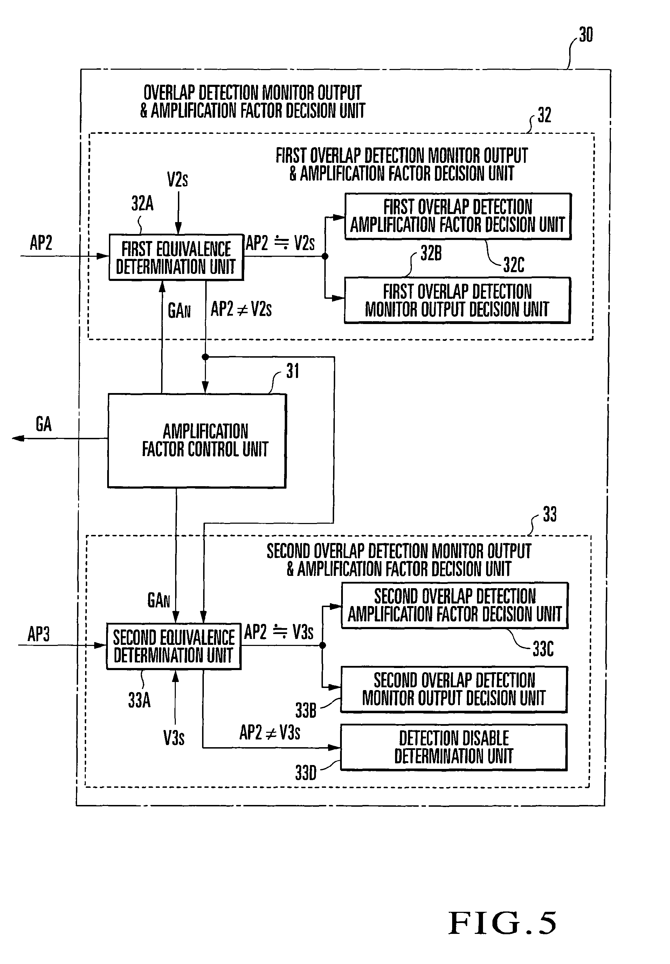

Fig. 5 shows the functional blocks of the overlap detection monitor output & amplification factor decision unit 30 in the processing unit 3A. The overlap detection monitor output & amplification factor decision unit 30 comprises an amplification factor control unit 31, first overlap detection monitor output & amplification factor decision unit 32, and second overlap detection monitor output & amplification factor decision unit 33.

The amplification factor control unit 31 raises the amplification factor GA of the second amplifier AMP2 stepwise from GA₀ to GA₂₅₅. The amplification factor control unit 31 performs the processes in, e.g., steps S5 and S17.

The first overlap detection monitor output & amplification factor decision unit 32 decides the output of the second amplifier AMP2 as the overlap detection monitor output when the output value AP2 of the second amplifier AMP2 is recognized to be almost equal to the set value V2s halfway through the process of causing the amplification factor control unit 31 to raise the amplification factor GA of the second amplifier AMP2 stepwise from GA₀ to GA₂₅₅. The first overlap detection monitor output & amplification factor decision unit 32 also receives the amplification factor GA_{N} of the second amplifier AMP2 at that time and decides the received amplification factor GA_{N} as the overlap detection amplification factor GAsp. If the output value AP2 of the second amplifier AMP2 is not recognized to be almost equal to the set value V2s even when the amplification factor control unit 31 raises the amplification factor GA of the second amplifier AMP2 stepwise from GA₀ to GA₂₅₅, the first overlap detection monitor output & amplification factor decision unit 32 sends an instruction to the amplification factor control unit 31 to make it again raise the amplification factor GA of the second amplifier AMP2 stepwise from GA₀ to GA₂₅₅.

The arrangement of the first overlap detection monitor output & amplification factor decision unit 32 will be described in more detail. The first overlap detection monitor output & amplification factor decision unit 32 comprises a first equivalence determination unit 32A, first overlap detection monitor output decision unit 32B, and first overlap detection amplification factor decision unit 32C. The first equivalence determination unit 32A performs the process in, e.g., step S7. The first overlap detection monitor output decision unit 32B performs the process in, e.g., step S12. The first overlap detection amplification factor decision unit 32C performs the process in, e.g., step S13.

The second overlap detection monitor output & amplification factor decision unit 33 decides the output from the third amplifier AMP3 as the overlap detection monitor output when the output value AP3 of the third amplifier AMP3 is recognized to be almost equal to the set value V3s halfway through the process of causing the amplification factor control unit 31 to raise the amplification factor GA of the second amplifier AMP2 stepwise from GA₀ to GA₂₅₅. The second overlap detection monitor output & amplification factor decision unit 33 also receives the amplification factor GA_{N} of the second amplifier AMP2 at that time and decides the received amplification factor GA_{N} as the overlap detection amplification factor GAsp. If the output value AP3 of the third amplifier AMP3 is not recognized to be almost equal to the set value V3s even when the amplification factor control unit 31 raises the amplification factor GA of the second amplifier AMP2 stepwise from GA₀ to GA₂₅₅, the second overlap detection monitor output & amplification factor decision unit 33 determines that detection is disabled.

The arrangement of the second overlap detection monitor output & amplification factor decision unit 33 will be described in more detail. The second overlap detection monitor output & amplification factor decision unit 33 comprises a second equivalence determination unit 33A, second overlap detection monitor output decision unit 33B, second overlap detection amplification factor decision unit 33C, and detection disable determination unit 33D. The second equivalence determination unit 33A performs the process in, e.g., step S19. The second overlap detection monitor output decision unit 33B performs the process in, e.g., step S24. The second overlap detection amplification factor decision unit 33C performs the process in, e.g., step S25. The detection disable determination unit 33D performs the process in, e.g., step S27.

In the first embodiment, the amplification factor GA of the second amplifier AMP2 is raised stepwise from GA₀ to GA₂₅₅. Alternatively, the amplification factor GA is set to GA₁₂₈ first. If the output value AP2 of the second amplifier AMP2 at that time is smaller than the set value V2s, the amplification factor GA is raised to GA₁₉₂. The amplification factor GA may be narrowed down in this way until the output value AP2 of the second amplifier AMP2 almost equals the set value V2s. This method will be described later in the second embodiment. This method can greatly speed up the processing as compared to the method of changing the amplification factor GA step by step.

In the first embodiment, if AP2 ≈ V2s does not hold even when the amplification factor GA of the second amplifier AMP2 is raised stepwise from GA₀ to GA₂₅₅, the amplification factor GA of the second amplifier AMP2 is raised again stepwise from GA₀ to GA₂₅₅, thereby searching for a point where the output value AP3 of the third amplifier AMP3 satisfies AP3 ≈ V3s. Alternatively, for example, the output value AP2 of the second amplifier AMP2 and the output value AP3 of the third amplifier AMP3 are stored while raising the amplification factor GA of the second amplifier AMP2 stepwise from GA₀ to GA₂₅₅. Then, the output value AP2 of the second amplifier AMP2 and the output value AP3 of the third amplifier AMP3 corresponding to the amplification factors GA₀ to GA₂₅₅ are observed. When the output value AP2 of the second amplifier AMP2 is recognized to be almost equal to the set value V2s, the output from the second amplifier AMP2 is decided as the overlap detection monitor output. If the output value AP2 of the second amplifier AMP2 is not recognized to be almost equal to the set value V2s, but the output value AP3 of the third amplifier AMP3 is recognized to be almost equal to the set value V3s, the output from the third amplifier AMP3 may be decided as the overlap detection monitor output. This obviates changing the amplification factor GA of the second amplifier AMP2 again and speeds up the processing.

Based on the output from the second or third amplifier AMP2 or AMP3 decided as the overlap detection monitor output by the first or second overlap detection monitor output decision unit 32B or 33B, an overlap detection unit 34 in the processing unit 3A detects overlap of the fed paper sheets 4 which pass between the ultrasonic transmitter 1 and the ultrasonic receiver 2.

### [Second Embodiment]

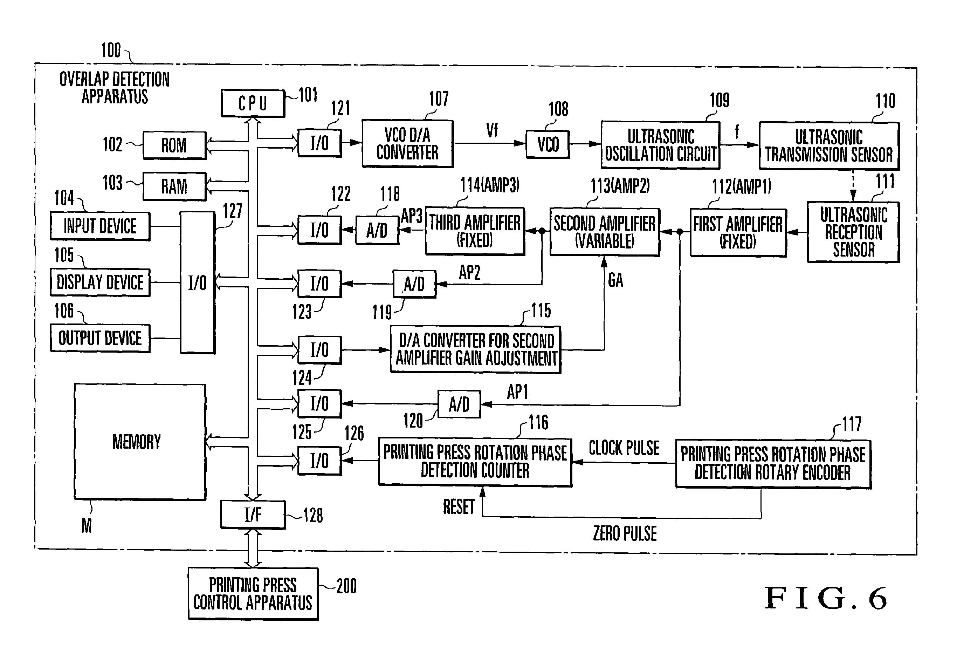

Fig. 6 shows an overlap detection apparatus according to the second embodiment of the present invention. An overlap detection apparatus 100 is connected to a printing press control apparatus 200 and comprises a CPU 101, ROM 102, RAM 103, input device 104, display device 105, output device 106, VCO (voltage to frequency converter) D/A converter 107, VCO 108, ultrasonic oscillation circuit 109, ultrasonic transmission sensor (ultrasonic transmitter) 110, ultrasonic reception sensor (ultrasonic receiver) 111, first amplifier (fixed amplifier) 112 (AMP1), second amplifier (variable amplifier) 113 (AMP2), third amplifier (fixed amplifier) 114 (AMP3), D/A converter 115 for second amplifier gain adjustment, printing press rotation phase detection counter 116, printing press rotation phase detection rotary encoder 117, A/D converters 118 to 120, interfaces 121 to 128, and memory M. Examples of the output device 106 are an FD driver and a printer.

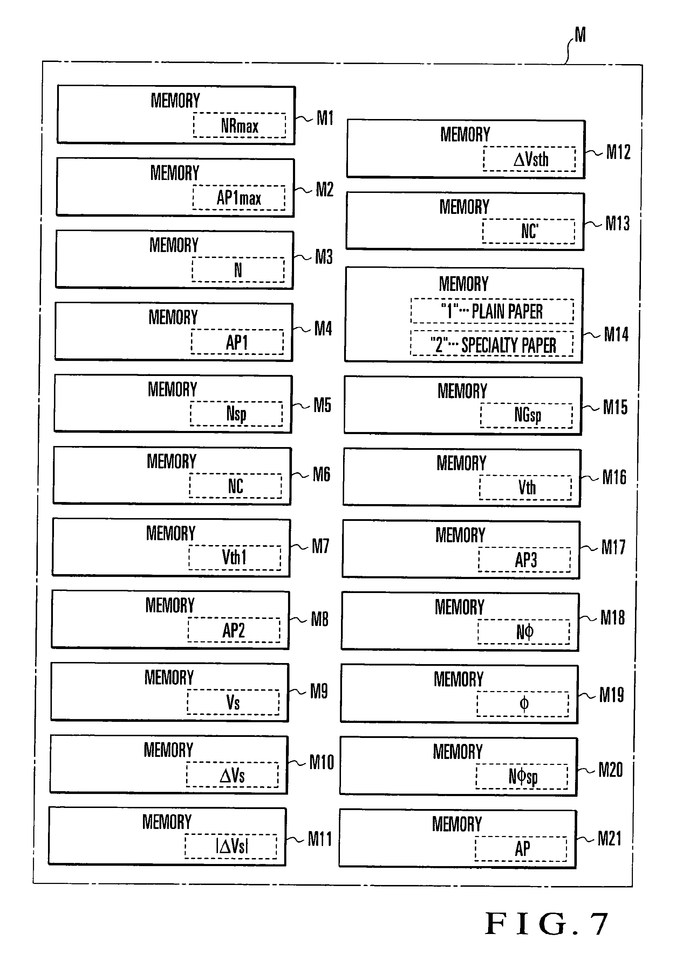

Fig. 7 shows the arrangement of the memory M. The memory M comprises a memory M1 for storing a count value N corresponding to the maximum output value of the ultrasonic reception sensor, a memory M2 for storing the maximum output value of the ultrasonic reception sensor, a memory M3 for storing the count value N, a memory M4 for storing the output value of the first amplifier, a memory M5 for storing the optimum driving frequency value of the ultrasonic transmission sensor, a memory M6 for storing the correction value of the count value N, a memory M7 for storing a paper presence determination threshold value, a memory M8 for storing the output value of the second amplifier, a memory M9 for storing an optimum gain value determination reference value, a memory M10 for storing the difference to the optimum gain value determination reference value, a memory M11 for storing the absolute value of the difference to the optimum gain value determination reference value, a memory M12 for storing an optimum gain value determination threshold value, a memory M13 for storing the next correction value of the count value N, a memory M14 for storing a paper type, a memory M15 for storing an optimum gain value, a memory M16 for storing an overlap detection threshold value, a memory M17 for storing the output value of the third amplifier, a memory M18 for storing the count value of the printing press rotation phase detection counter, a memory M19 for storing a printing press rotation phase, a memory M20 for storing an overlap detection phase, and a memory M21 for storing a detection output value.

In the memory M, the memory M1 stores a count value NRmax corresponding to the maximum output value of the ultrasonic reception sensor. The memory M2 stores a maximum output value AP1max of the ultrasonic reception sensor. The memory M3 stores the count value N. The memory M4 stores an output value AP1 of the first amplifier. The memory M5 stores an optimum driving frequency value Nsp of the ultrasonic transmission sensor. The memory M6 stores a correction value NC of the count value N. The memory M7 stores a paper presence determination threshold value Vth1. The memory M8 stores an output value AP2 of the second amplifier. The memory M9 stores an optimum gain value determination reference value Vs (= V1s, V2s).

The memory M10 stores a difference ΔVs between the output value of the second amplifier and the optimum gain value determination reference value. The memory M11 stores an absolute value |ΔVs| of the difference between the output value of the second amplifier and the optimum gain value determination reference value. The memory M12 stores an optimum gain value determination threshold value ΔVsth. The memory M13 stores a next correction value NC' of the count value N. The memory M14 stores "1" when the paper type is plain paper, and "2" for specialty paper. The memory M15 stores an optimum gain value NGsp.

The memory M16 stores an overlap detection threshold value Vth. The memory M17 stores an output value AP3 of the third amplifier. The memory M18 stores a count value Nφ of the printing press rotation phase detection counter. The memory M19 stores a printing press rotation phase φ. The memory M20 stores an overlap detection phase Nφsp. The memory M21 stores a detection output value AP. The contents stored in the memories M1 to M21 will be explained later in association with the description of the overlap detection processing operation.

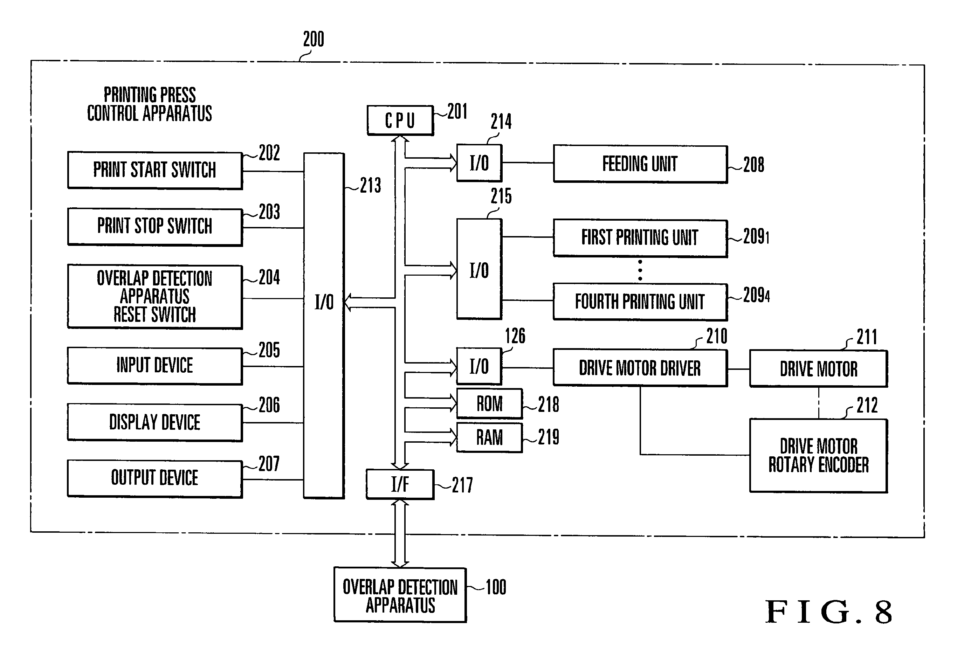

Fig. 8 shows the arrangement of the printing press control apparatus 200. The printing press control apparatus 200 comprises a CPU 201, print start switch 202, print stop switch 203, overlap detection apparatus reset switch 204, input device 205, display device 206, output device 207, feeding unit 208, first printing unit 209₁ to fourth printing unit 209₄, drive motor driver 210, drive motor 211, drive motor rotary encoder 212, interfaces 213 to 217, ROM 218, and RAM 219.

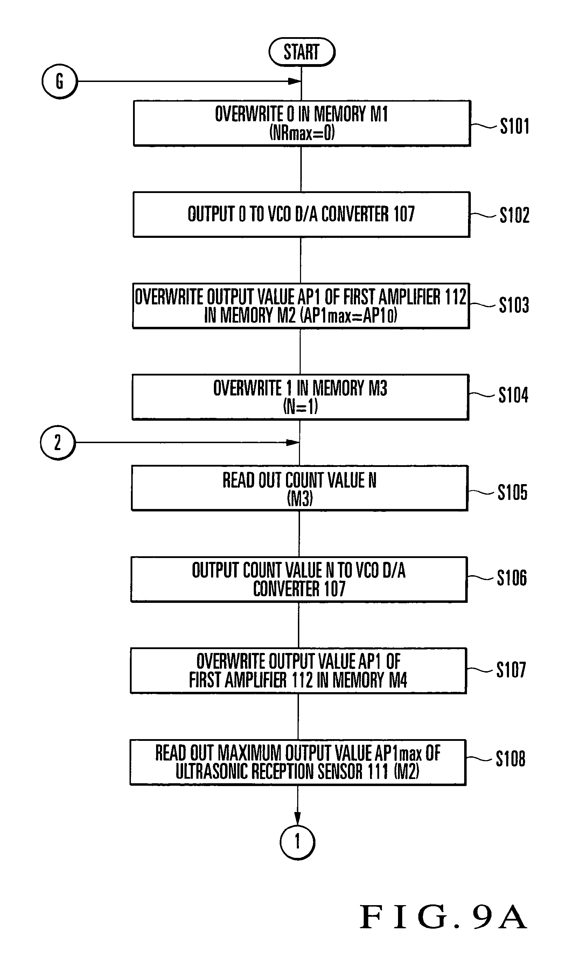

A processing operation unique to the embodiment, which is executed by the CPU 101 of the overlap detection apparatus 100, will be described below with reference to the flowcharts shown in Figs. 9A to 10C. The CPU 101 executes the processing operation in accordance with an overlap detection program stored in the ROM 102.

### [Decision of Optimum Driving Frequency of Ultrasonic Transmission Sensor]

Upon receiving an instruction to start the overlap detection program, the CPU 101 sets the count value NRmax corresponding to the maximum output value of the ultrasonic reception sensor in the memory M1 to 0 (Fig. 9A: step S101). Next, the CPU outputs "0" to the VCO D/A converter 107 (step S102) so that a driving frequency f from the ultrasonic oscillation circuit 109 to the ultrasonic transmission sensor 110 is set to f₀. The CPU receives the output value AP1 (AP1₀) from the first amplifier 112 via the A/D converter 120 and overwrites it in the memory M2 as the maximum output value APlmax (step S103).

The CPU 101 sets the count value N in the memory M3 to "1" (step S104), reads out the count value N from the memory M3 (step S105), and outputs it to the VCO D/A converter 107 (step S106). The driving frequency f from the ultrasonic oscillation circuit 109 to the ultrasonic transmission sensor 110 is set to f₁. The CPU 101 receives the output value AP1 (AP1₁) from the first amplifier 112 at this time via the A/D converter 120 and overwrites it in the memory M4 (step S107).

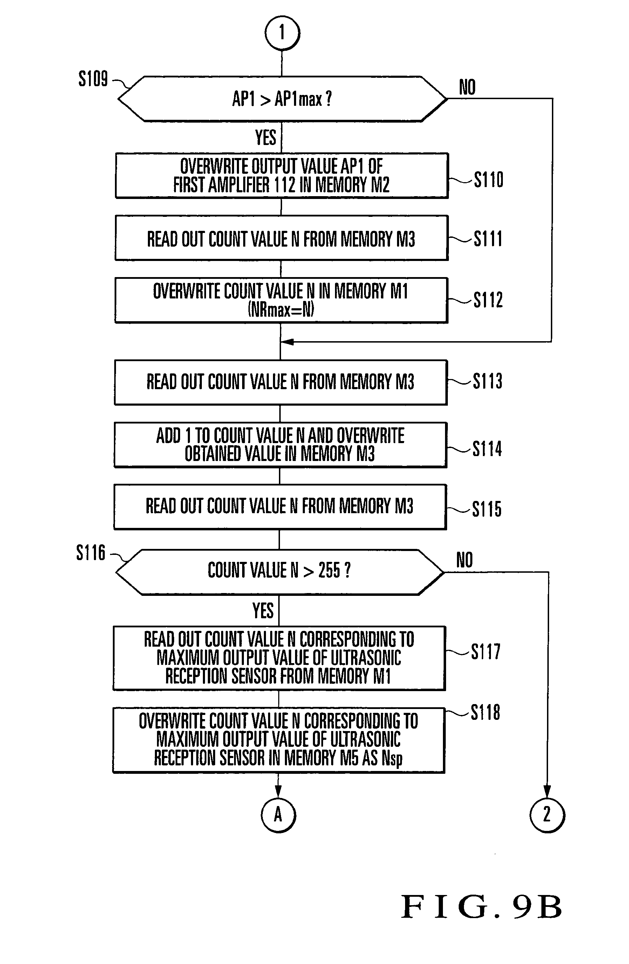

The CPU reads out the maximum output value APlmax (AP1₀) of the ultrasonic reception sensor at that time from the memory M2 (step S108) and compares it with the output value AP1 (AP1₁) of the first amplifier 112 in the memory M4 (Fig. 9B: step S109). If AP1 is larger than AP1max (YES in step S109), the CPU overwrites AP1 in the memory M2 as APlmax (step S110). In this case, since AP1₁ is larger than AP1₀, APlmax changes to AP1₁. The CPU reads out the count value N = 1 from the memory M3 (step S111) and overwrites the readout count value N = 1 in the memory M1 as NRmax (step S112).

The CPU 101 increments the count value N in the memory M3 by one to set N = 2 (steps S113 and S114). The CPU reads out the count value N from the memory M3 (step S115) and repeats the processing operation in steps S105 to S116 until the count value N satisfies N > 255 (NO in step S116). During this processing operation, if AP1 ≤ APlmax in step S109, the process jumps to step S113 to repeat the same processing operation without executing steps S110, S111, and S112.

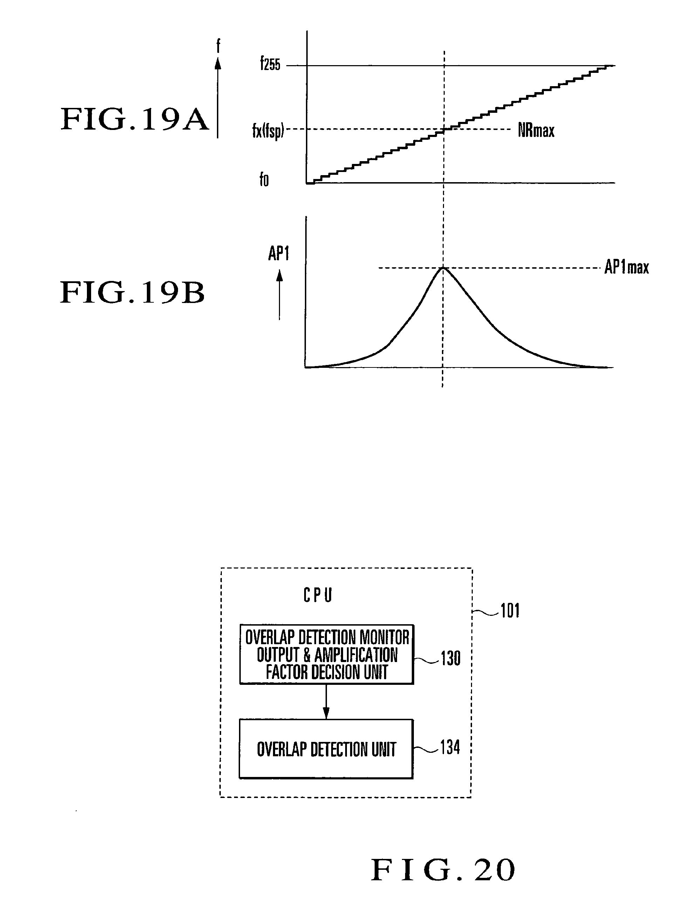

With the repetitive processing operation, the driving frequency f to the ultrasonic transmission sensor 110 changes stepwise from f₀ to f₂₅₅ (see Fig. 19A). The maximum one of the output values AP1 of the first amplifier 112 obtained in correspondence with the driving frequencies f₀ to f₂₅₅ is stored as AP1max (see Fig. 19B). The count value N corresponding to a driving frequency fx upon obtaining the maximum value APlmax is stored in the memory M1 as the count value NRmax corresponding to the maximum output value of the ultrasonic reception sensor.

If N > 255 (YES in step S116), the CPU 101 reads out, from the memory M1, the count value NRmax corresponding to the maximum output value of the ultrasonic reception sensor (step S117) and writes the readout count value NRmax in the memory M5 as the optimum driving frequency value Nsp of the ultrasonic transmission sensor (step S118). That is, the CPU decides f_{Nsp} as the optimum driving frequency of the ultrasonic transmission sensor and writes the optimum driving frequency value Nsp corresponding to the optimum driving frequency f_{Nsp} in the memory M5.

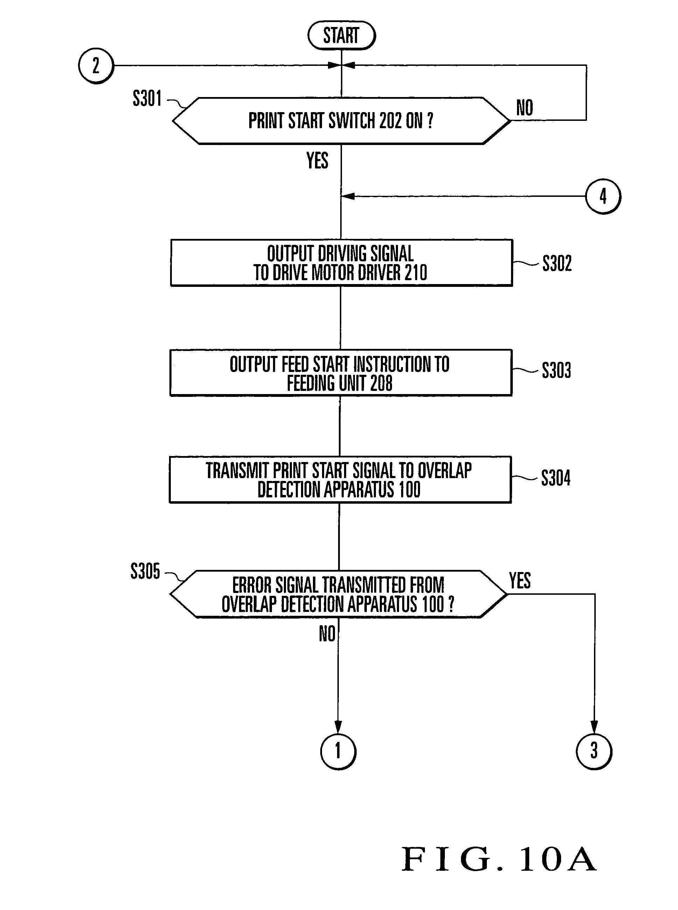

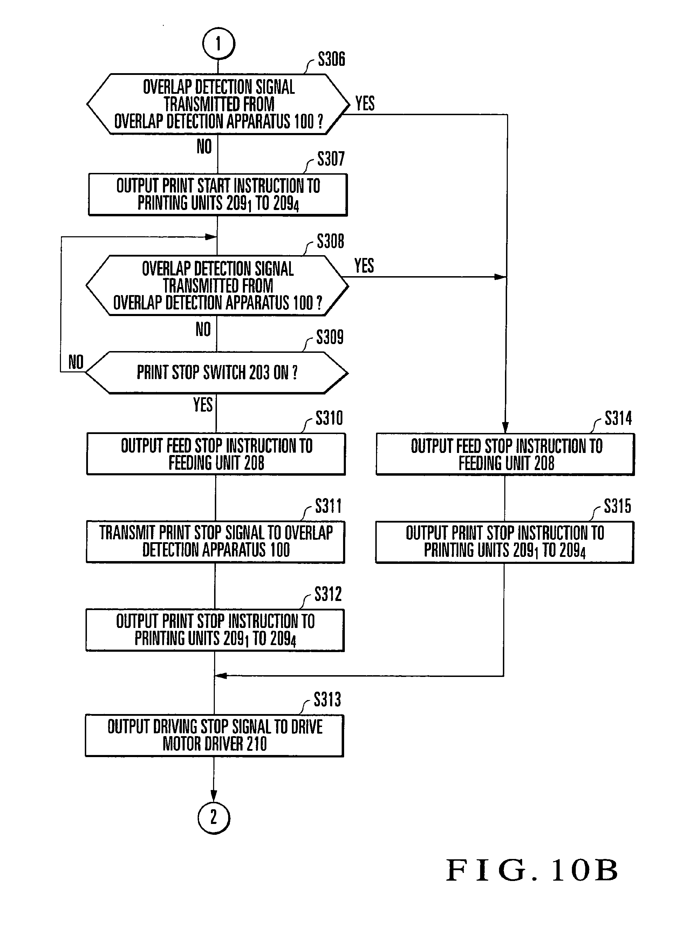

In the printing press control apparatus 200, when the print start switch 202 is turned on (Fig 10A: YES in step S301), a driving signal is output to the drive motor driver 210 (step S302) to start operating the printing press. A feed start instruction is output to the feeding unit 208 (step S303) to start paper feed to the printing press. Additionally, a print start signal is transmitted to the overlap detection apparatus 100 (step S304). A print start instruction is output to the printing units 209₁ to 209₄ (Fig. 10B: step S307).

### [Decision of Overlap Detection Monitor Output and Gain]

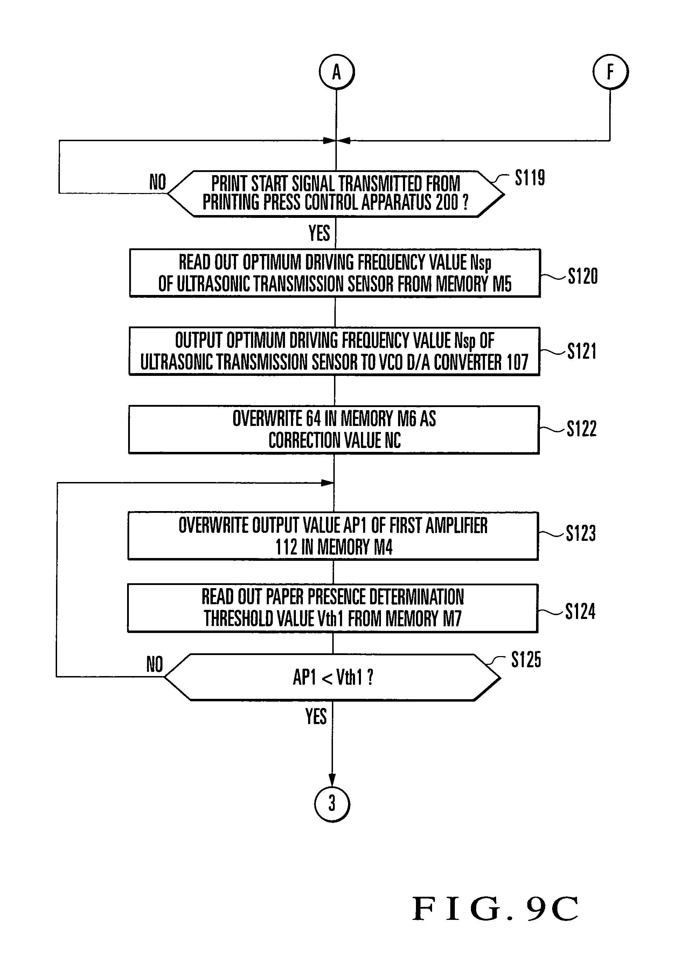

Upon receiving the print start signal from the printing press control apparatus 200 (Fig. 9C: YES in step S119), the CPU 101 of the overlap detection apparatus 100 reads out the optimum driving frequency value Nsp of the ultrasonic sensor from the memory M5 (step S120) and outputs the readout optimum driving frequency value Nsp of the ultrasonic sensor to the VCO D/A converter 107 (step S121). The driving frequency f from the ultrasonic oscillation circuit 109 to the ultrasonic transmission sensor 110 is set to the optimum driving frequency f_{Nsp}.

The CPU 101 writes "64" (= 256 ÷ 2 ÷ 2) in the memory M6 as the correction value NC of the count value N (step S122). The CPU receives the output value AP1 from the first amplifier 112 (step S123), reads out the paper presence determination threshold value Vth1 from the memory M7 (step S124), and compares the output value AP1 of the first amplifier 112 with the paper presence determination threshold value Vth1 (step S125).

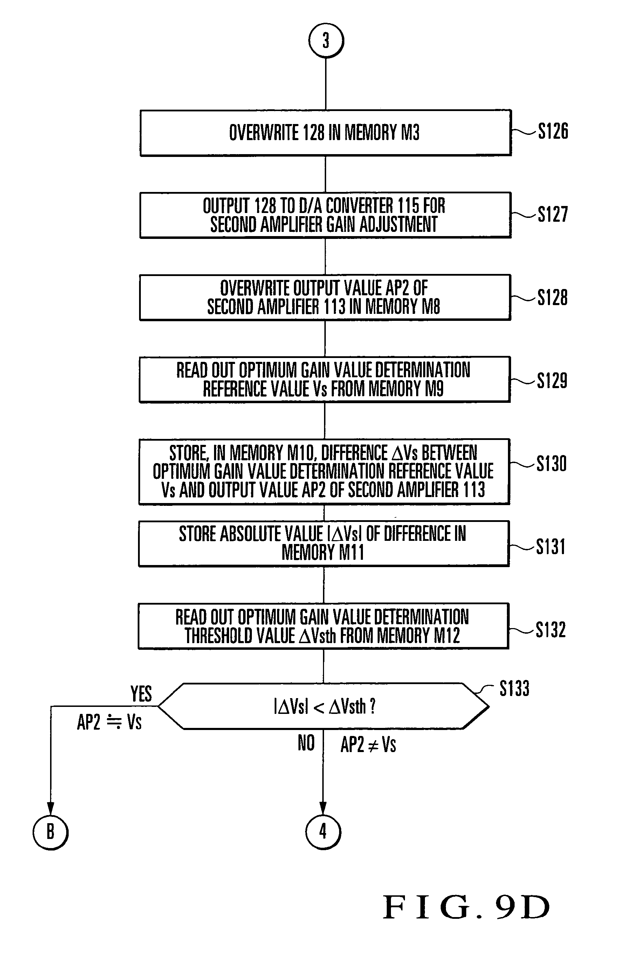

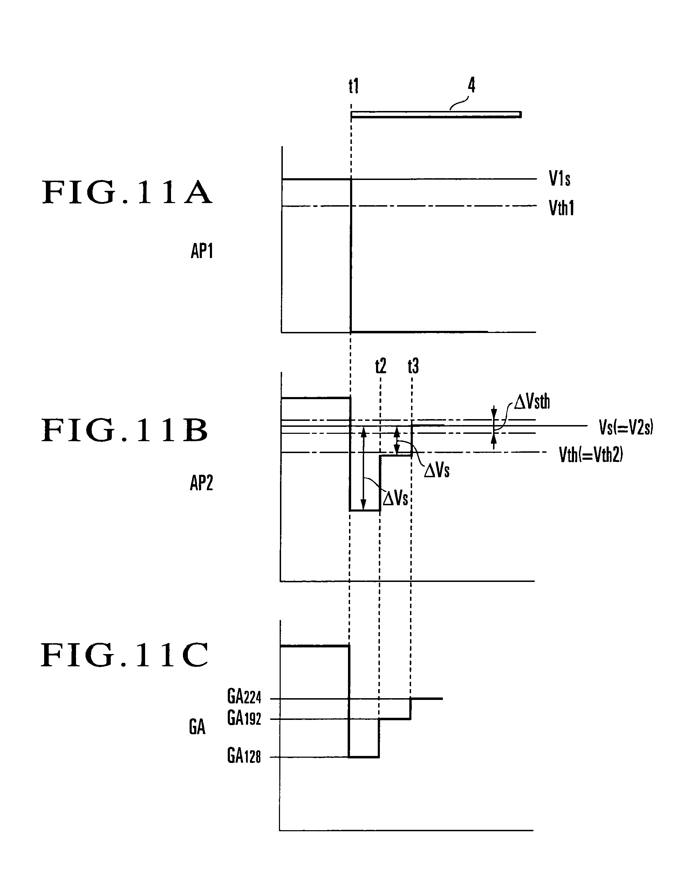

The CPU 101 repeats the processing in steps S123 to S125. Upon confirming AP1 < Vth1 (YES in step S125, Fig. 11A: point t1), the CPU determines that one fed paper sheet 4 is sandwiched between the ultrasonic transmission sensor 110 and the ultrasonic reception sensor 111, and writes "128" in the memory M3 as the count value N (Fig. 9D: step S126). The CPU outputs the written count value N = 128 to the D/A converter 115 for second amplifier gain adjustment (step S127) to set the gain GA of the second amplifier 113 to GA₁₂₈ (Fig. 11C: point t1). The CPU also receives the output value AP2 from the second amplifier 113 via the A/D converter 119 (Fig. 11B: point t1) and writes it in the memory M8 (step S128).

The CPU reads out the optimum gain value determination reference value Vs from the memory M9 (step S129), subtracts the output value AP2 of the second amplifier 113 from the optimum gain value determination reference value Vs to obtain the difference ΔVs between the output value AP2 of the second amplifier 113 and the optimum gain value determination reference value Vs (step S130), and obtains the absolute value |ΔVs| (step S131). The obtained difference ΔVs is written in the memory M10. The absolute value |ΔVs| of the difference is written in the memory M11.

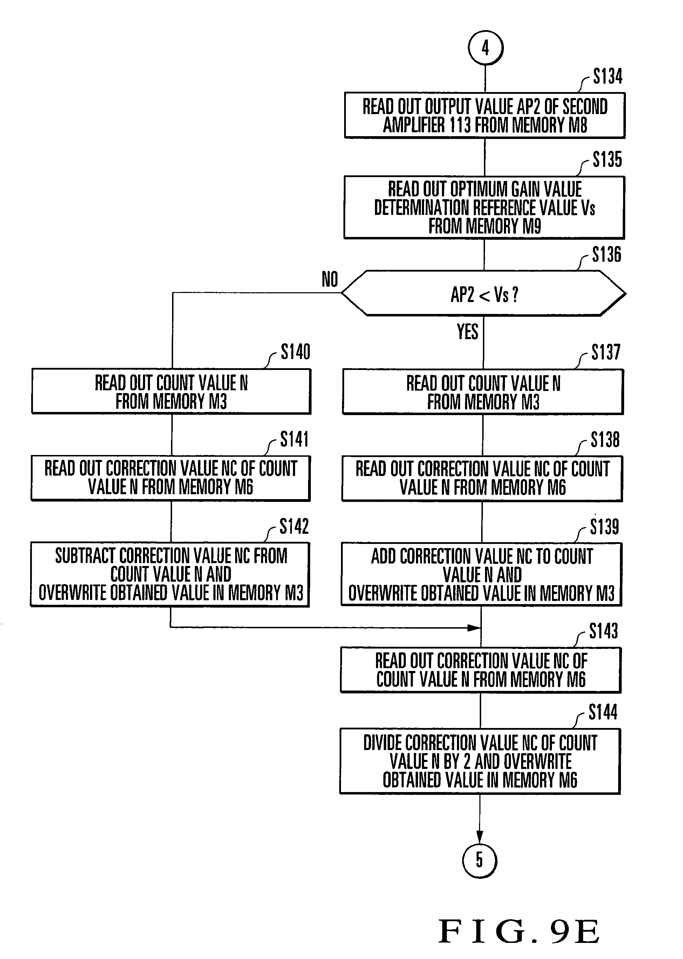

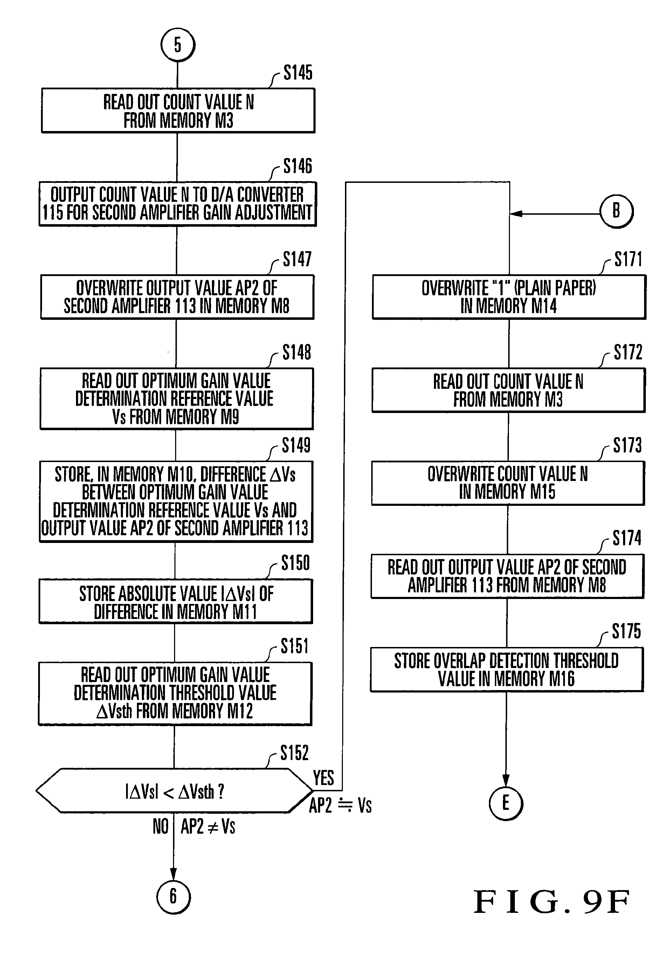

The CPU 101 reads out the optimum gain value determination threshold value ΔVsth from the memory M12 (step S132) and compares it with the absolute value |ΔVs| of the difference (step S133). If |ΔVs| < ΔVsth does not hold (NO in step S133), the process advances to step S134 (Fig. 9E). If |ΔVs| < ΔVsth (YES in step S133), the process advances to step S171 (Fig. 9F).

In this example, |ΔVs| < ΔVsth does not hold, and therefore, the process advances to step S134. In this case, the CPU 101 reads out the output value AP2 of the second amplifier 113 at that time from the memory M8 (step S134), reads out the optimum gain value determination reference value Vs from the memory M9 (step S135), and compares the output value AP2 of the second amplifier 113 with the optimum gain value determination reference value Vs (step S136).

### [If AP2 < Vs]

If AP2 < Vs (YES in step S136), the CPU 101 reads out the count value N = 128 at that time from the memory M3 (step S137), reads out the correction value NC = 64 of the count value N at that time from the memory M6 (step S138), adds the correction value NC to the count value N to obtain N = 128 + 64 = 192, and overwrites the obtained count value N = 192 in the memory M3 (step S139). The CPU also reads out the correction value NC = 64 of the count value N at that time from the memory M6 (step S143), divides the correction value NC of the count value N by 2 to obtain NC = 64/2 = 32, and overwrites the obtained correction value NC = 32 in the memory M6 (step S144).

The CPU reads out the count value N = 192 from the memory M3 (Fig. 9F: step S145), and outputs the readout count value N = 192 to the D/A converter 115 for second amplifier gain adjustment (step S146) to set the gain GA of the second amplifier 113 to GA₁₉₂ (Fig. 11C: point t2). The CPU also receives the output value AP2 from the second amplifier 113 via the A/D converter 119 (Fig. 11B: point t2) and writes it in the memory M8 (step S147).

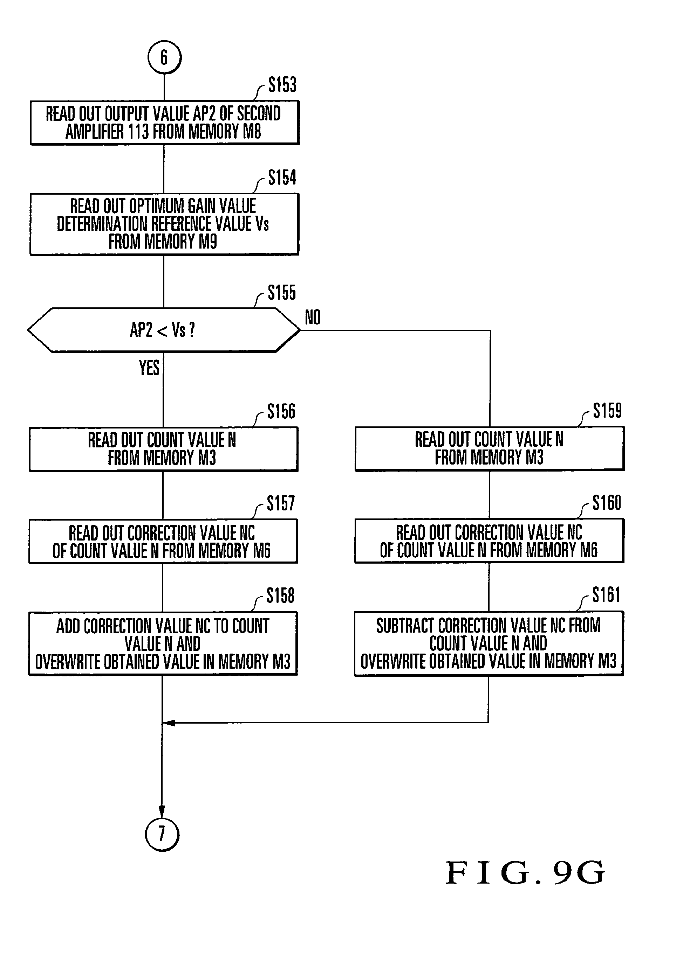

The CPU reads out the optimum gain value determination reference value Vs from the memory M9 (step S148), subtracts the output value AP2 of the second amplifier 113 from the optimum gain value determination reference value Vs to obtain the difference ΔVs between the output value AP2 of the second amplifier 113 and the optimum gain value determination reference value Vs (step S149), and obtains the absolute value |ΔVs| (step S150). The CPU reads out the optimum gain value determination threshold value ΔVsth from the memory M12 (step S151) and compares it with the absolute value |ΔVs| of the difference (step S152). If |ΔVs| < ΔVsth does not hold (NO in step S152), the process advances to step S153 (Fig. 9G). If |ΔVs| < ΔVsth (YES in step S152), the process advances to step S171.

In this example, |ΔVs| < ΔVsth does not hold, and therefore, the process advances to step S153. In this case, the CPU 101 reads out the output value AP2 of the second amplifier 113 at that time from the memory M8 (step S153), reads out the optimum gain value determination reference value Vs from the memory M9 (step S154), and compares the output value AP2 of the second amplifier 113 with the optimum gain value determination reference value Vs (step S155).

In this example, AP2 < Vs. In this case, the CPU 101 reads out the count value N = 192 at that time from the memory M3 (step S156), reads out the correction value NC = 32 of the count value N at that time from the memory M6 (step S157), adds the correction value NC to the count value N to obtain N = 192 + 32 = 224, and overwrites the obtained count value N = 224 in the memory M3 (step S158).

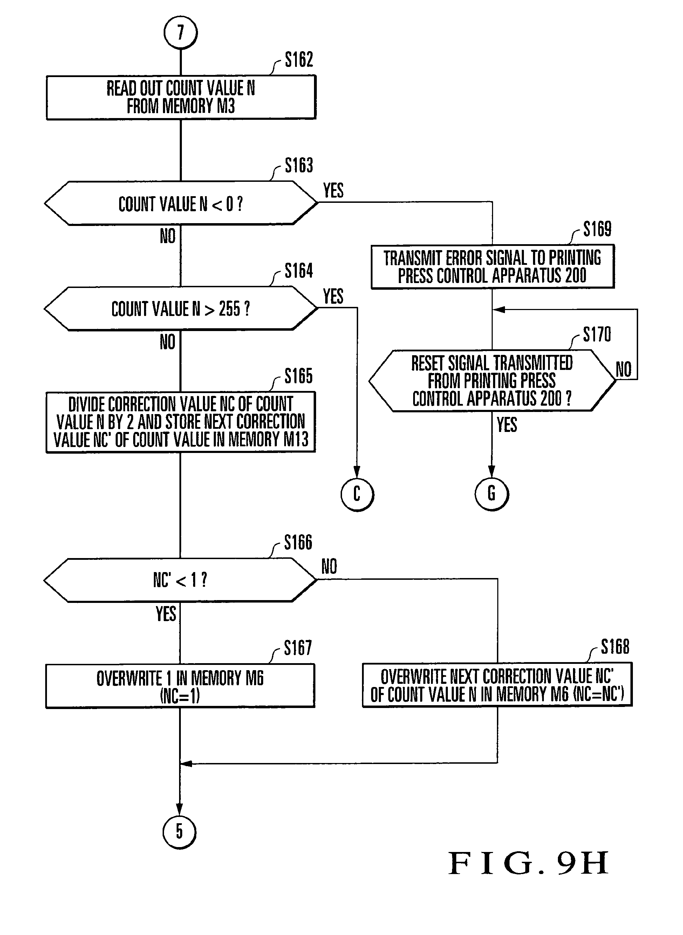

The CPU also reads out the count value N = 224 from the memory M3 (Fig. 9H: step S162), confirms that N < 0 does not hold (NO in step S163), confirms that N > 255 does not hold (NO in step S164), divides the correction value NC = 32 of the count value N at that time by 2 to obtain the next correction value NC' of the count value as NC' = 32/2 = 16, and overwrites the obtained next correction value NC' = 16 in the memory M13 (step S165).

The CPU checks whether the next correction value NC' of the count value N satisfies NC' < 1 (step S166). If NC' < 1, the CPU sets the correction value NC of the count value N in the memory M6 to "1" (step S167). If NC' < 1 does not hold, the CPU sets the correction value NC of the count value N in the memory M6 to the next correction value NC' of the count value N (step S168). In this case, since NC' = 16, the correction value NC of the count value N in the memory M6 is set to NC = 16.

The CPU reads out the count value N = 224 from the memory M3 (Fig. 9F: step S145), and outputs the readout count value N = 224 to the D/A converter 115 for second amplifier gain adjustment (step S146) to set the gain GA of the second amplifier 113 to GA₂₂₄ (Fig. 11C: point t3). The CPU also receives the output value AP2 from the second amplifier 113 via the A/D converter 119 (Fig. 11B: point t3) and writes it in the memory M8 (step S147).

The CPU reads out the optimum gain value determination reference value Vs from the memory M9 (step S148), subtracts the output value AP2 of the second amplifier 113 from the optimum gain value determination reference value Vs to obtain the difference ΔVs between the output value AP2 of the second amplifier 113 and the optimum gain value determination reference value Vs (step S149), and obtains the absolute value |ΔVs| (step S150). The CPU reads out the optimum gain value determination threshold value ΔVsth from the memory M12 (step S151) and compares it with the absolute value |ΔVs| of the difference (step S152). If |ΔVs| < ΔVsth does not hold (NO in step S152), the process advances to step S153 (Fig. 9G). If |ΔVs| < ΔVsth (YES in step S152), the process advances to step S171.

In this example, |ΔVs| < ΔVsth, and therefore, the process advances to step S171. In this case, the CPU 101 determines that the output value AP2 of the second amplifier 113 is almost equal to the optimum gain value determination reference value Vs (AP2 ≈ Vs), and writes "1" representing that the fed paper sheet 4 is plain paper in the memory M14 (step S171). The CPU reads out the count value N = 224 at that time from the memory M3 (step S172) and writes it in the memory M15 as the optimum gain value NGsp (step S173). The CPU reads out the output value AP2 of the second amplifier 113 from the memory M8 (step S174), multiplies the readout output value AP2 of the second amplifier by 0.8 to obtain the overlap detection threshold value Vth, and writes it in the memory M16 (step S175).

In this example, when the gain GA of the second amplifier 113 is GA₂₂₄, |ΔVs| < ΔVsth. If [ΔVs| < ΔVsth does not hold (however, if AP2 < Vs continues), the gain GA increases while halving the correction value NC. In this case, the gain GA increases stepwise, like "GA₂₂₄" → "GA₂₄₀" → "GA₂₄₈" → "GA₂₅₂" → "GA₂₅₄" → "GA₂₅₅".

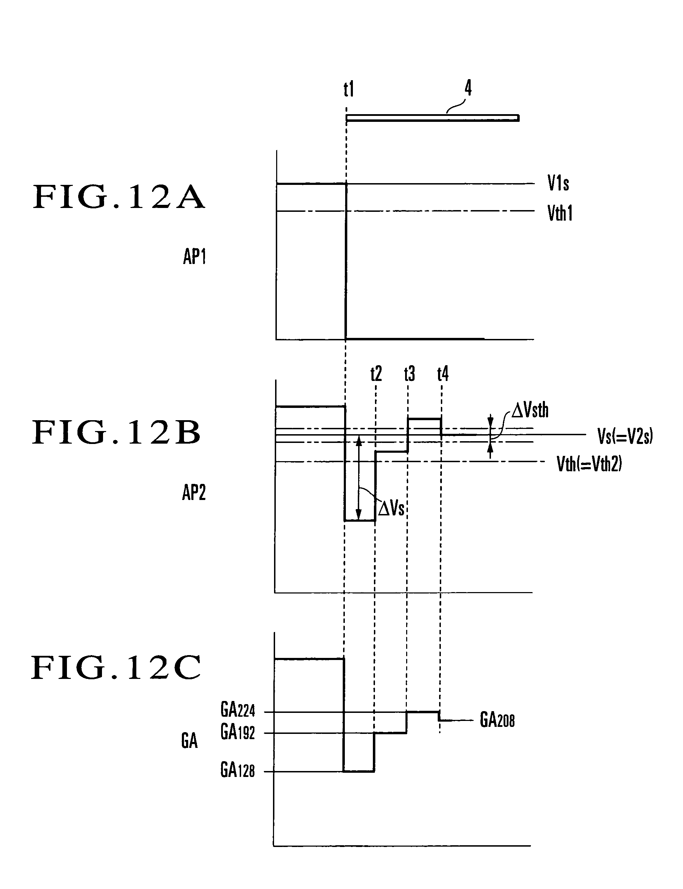

In this example, when the gain GA of the second amplifier 113 is GA₂₂₄, |ΔVs| < ΔVsth. In some cases, |ΔVs| < ΔVsth does not hold, and AP2 > Vs holds (Fig. 12B: point t3). In this case, the determination result in step S155 (Fig. 9G) is NO, and the process advances to step S159 to read out the count value N = 224 at that time from the memory M3 (step S159). The CPU reads out the correction value NC = 16 of the count value N at that time from the memory M6 (step S160), subtracts the correction value NC from the count value N to obtain N = 224 - 16 = 208, and sets the gain GA of the second amplifier 113 to GA₂₀₈ (Fig. 12C: point t4).

### [If AP2 ≥ Vs]

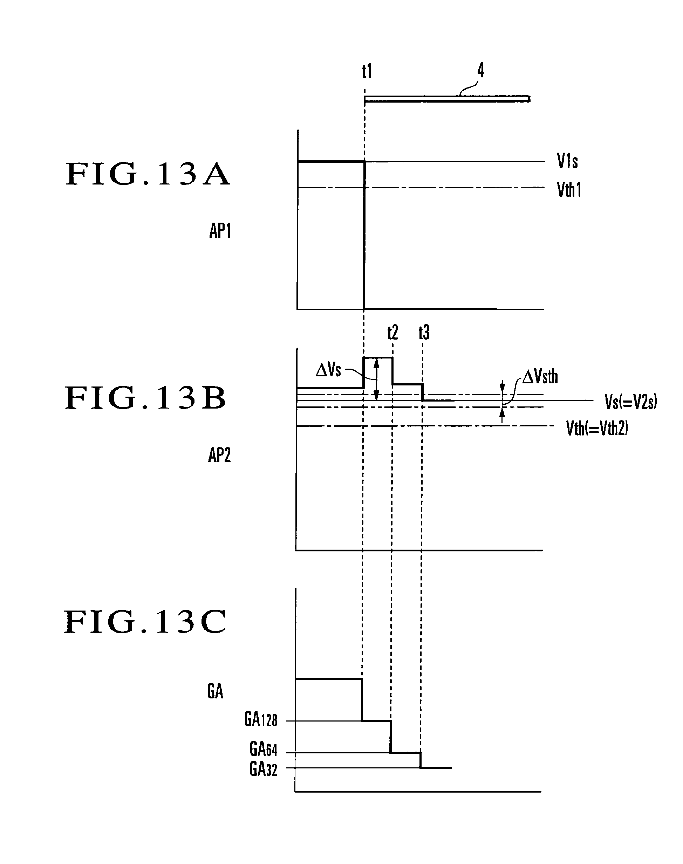

In step S136 (Fig. 9E), if AP2 ≥ Vs (Fig. 13B: point t1), the CPU 101 reads out the count value N = 128 at that time from the memory M3 (step S140), reads out the correction value NC = 64 of the count value N at that time from the memory M6 (step S141), subtracts the correction value NC from the count value N to obtain N = 128 - 64 = 64, and overwrites the obtained count value N = 64 in the memory M3 (step S142). The CPU also reads out the correction value NC = 64 of the count value N at that time from the memory M6 (step S143), divides the correction value NC of the count value N by 2 to obtain NC = 64/2 = 32, and overwrites the obtained correction value NC = 32 in the memory M6 (step S144).

The CPU reads out the count value N = 64 from the memory M3 (Fig. 9F: step S145), and outputs the readout count value N = 64 to the D/A converter 115 for second amplifier gain adjustment (step S146) to set the gain GA of the second amplifier 113 to GA₆₄ (Fig. 13C: point t2). The CPU also receives the output value AP2 from the second amplifier 113 via the A/D converter 119 (Fig. 13B: point t2) and writes it in the memory M8 (step S147).

The CPU reads out the optimum gain value determination reference value Vs from the memory M9 (step S148), subtracts the output value AP2 of the second amplifier 113 from the optimum gain value determination reference value Vs to obtain the difference ΔVs between the output value AP2 of the second amplifier 113 and the optimum gain value determination reference value Vs (step S149), and obtains the absolute value |ΔVs| (step S150). The CPU reads out the optimum gain value determination threshold value ΔVsth from the memory M12 (step S151) and compares it with the absolute value |ΔVs| of the difference (step S152). If |ΔVs| < ΔVsth does not hold (NO in step S152), the process advances to step S153 (Fig. 9G). If |ΔVs| < ΔVsth (YES in step S152), the process advances to step S171.

In this example, |ΔVs| < ΔVsth does not hold, and therefore, the process advances to step S153. In this case, the CPU 101 reads out the output value AP2 of the second amplifier 113 at that time from the memory M8 (step S153), reads out the optimum gain value determination reference value Vs from the memory M9 (step S154), and compares the output value AP2 of the second amplifier 113 with the optimum gain value determination reference value Vs (step S155).

In this example, AP2 > Vs. In this case, the CPU 101 reads out the count value N = 64 at that time from the memory M3 (step S159), reads out the correction value NC = 32 of the count value N at that time from the memory M6 (step S160), subtracts the correction value NC from the count value N to obtain N = 64 - 32 = 32, and overwrites the obtained count value N = 32 in the memory M3 (step S161).

The CPU also reads out the count value N = 32 from the memory M3 (Fig. 9H: step S162), divides the correction value NC = 32 of the count value N at that time by 2 to obtain the next correction value NC' of the count value as NC' = 32/2 = 16, and overwrites the obtained next correction value NC' = 16 in the memory M13 (step S165).

The CPU checks whether the next correction value NC' of the count value N satisfies NC' < 1 (step S166). If NC' < 1, the CPU sets the correction value NC of the count value N in the memory M6 to "1" (step S167). If NC' < 1 does not hold, the CPU sets the correction value NC of the count value N in the memory M6 to the next correction value NC' of the count value N (step S168). In this case, since NC' = 16, the correction value NC of the count value N in the memory M6 is set to NC = 16.

The CPU reads out the count value N = 32 from the memory M3 (Fig. 9F: step S145), and outputs the readout count value N = 32 to the D/A converter 115 for second amplifier gain adjustment (step S146) to set the gain GA of the second amplifier 113 to GA₃₂ (Fig. 13C: point t3). The CPU also receives the output value AP2 from the second amplifier 113 via the A/D converter 119 (Fig. 13B: point t3) and writes it in the memory M8 (step S147).

The CPU reads out the optimum gain value determination reference value Vs from the memory M9 (step S148), subtracts the output value AP2 of the second amplifier 113 from the optimum gain value determination reference value Vs to obtain the difference ΔVs between the output value AP2 of the second amplifier 113 and the optimum gain value determination reference value Vs (step S149), and obtains the absolute value |ΔVs| (step S150). The CPU reads out the optimum gain value determination threshold value ΔVsth from the memory M12 (step S151) and compares it with the absolute value |ΔVs| of the difference (step S152). If |ΔVs| < ΔVsth does not hold (NO in step S152), the process advances to step S153 (Fig. 9G). If |ΔVs| < ΔVsth (YES in step S152), the process advances to step S171.

In this example, |ΔVs| < ΔVsth, and therefore, the process advances to step S171. In this case, the CPU 101 determines that the output value AP2 of the second amplifier 113 is almost equal to the optimum gain value determination reference value Vs (YES in step S152), and writes "1" representing that the fed paper sheet 4 is plain paper in the memory M14 (step S171). The CPU reads out the count value N = 32 at that time from the memory M3 (step S172) and writes it in the memory M15 as the optimum gain value NGsp (step S173). The CPU reads out the output value AP2 of the second amplifier 113 from the memory M8 (step S174), multiplies the readout output value AP2 of the second amplifier by 0.8 to obtain the overlap detection threshold value Vth, and writes it in the memory M16 (step S175).

In this example, when the gain GA of the second amplifier 113 is GA₃₂, |ΔVs| < ΔVsth. If |ΔVs| < ΔVsth does not hold (however, if AP2 > Vs continues), the gain GA decreases while halving the correction value NC. In this case, the gain GA decreases stepwise, like "GA₃₂" → "GA₁₆" → "GA₈" → "GA₄" → "GA₂" → "GA₁" → "GA₀".

After the gain GA is set to "GA₁", the correction value NC' of the count value N in step S165 (Fig. 9H) is 0.5. Since YES in step S166, the process advances to step S167 to set the correction value NC of the count value to 1. If the count value N < 0 in step S163, the CPU transmits an error signal to the printing press control apparatus 200 (step S169).

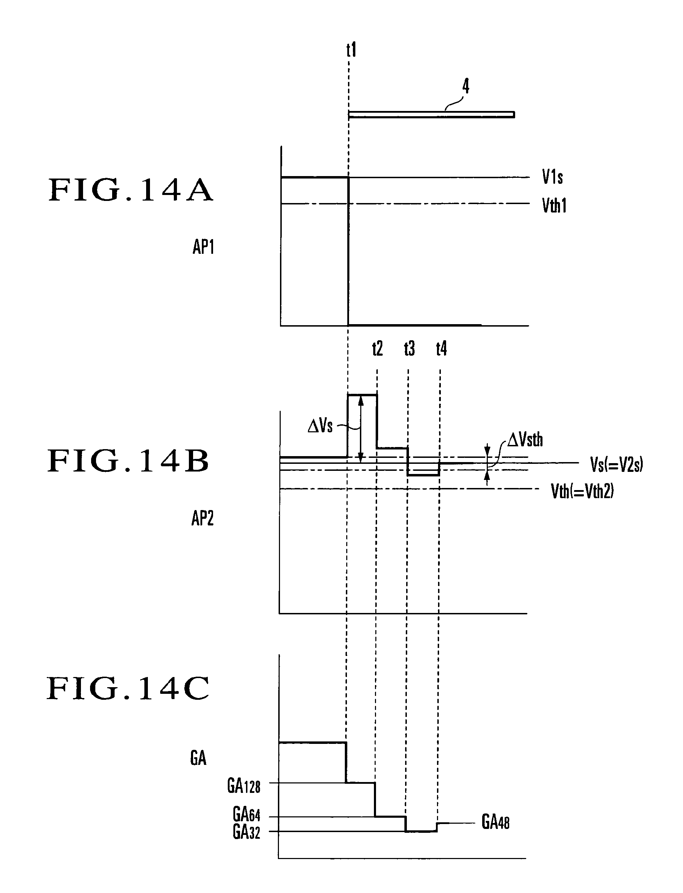

In this example, when the gain GA of the second amplifier 113 is GA₃₂, |ΔVs| < ΔVsth. In some cases, |ΔVs| < ΔVsth does not hold, and AP2 < Vs holds (Fig. 14B: point t3). In this case, the determination result in step S155 (Fig. 9G) is YES, and the process advances to step S156 to read out the count value N = 32 at that time from the memory M3 (step S156). The CPU reads out the correction value NC = 16 of the count value N at that time from the memory M6 (step S157), adds the correction value NC to the count value N to obtain N = 32 + 16 = 48 (step S158), and sets the gain GA of the second amplifier 113 to GA₄₈ (Fig. 14C: point t4) .

### [If |ΔVs| < ΔVsth Does Not Hold in Spite of Adjustment of Gain GA]

If the count value N > 255 in step S164 (Fig. 9H), the CPU 101 determines that |ΔVs| < ΔVsth cannot hold upon adjusting the gain GA of the second amplifier 113. That is, the CPU determines that AP2 ≈ Vs cannot hold upon adjusting the gain GA of the second amplifier 113.

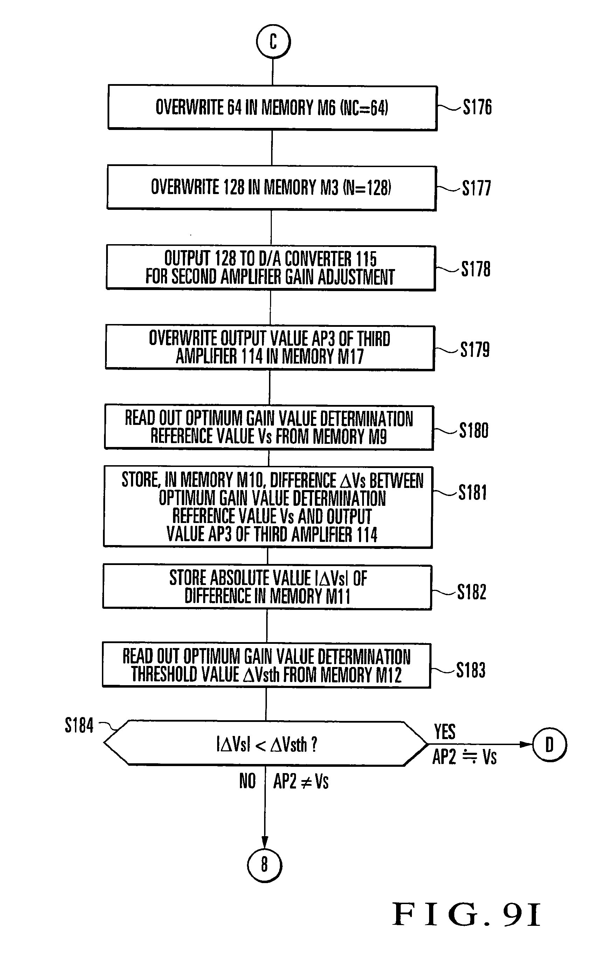

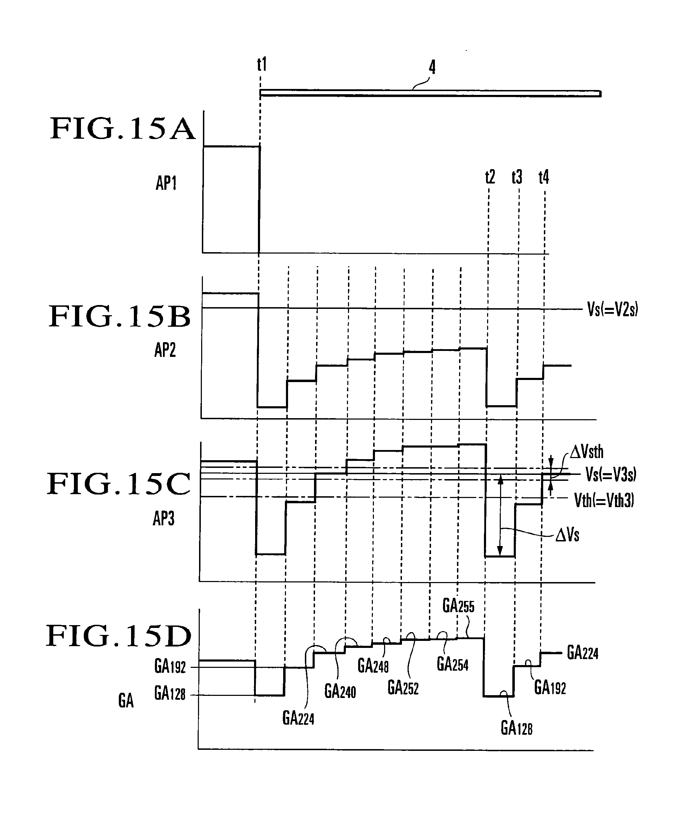

In this case, the CPU 101 writes "64" (= 256 ÷ 2 ÷ 2) in the memory M6 as the correction value NC of the count value N (Fig. 9I: step S176), writes "128" in the memory M3 as the count value N (step S177), outputs the written count value N = 128 to the D/A converter 115 for second amplifier gain adjustment (step S178) to set the gain GA of the second amplifier 113 to GA₁₂₈ (Fig. 15D: point t2). The CPU receives the output value AP3 from the third amplifier 114 via the A/D converter 118 (Fig. 15C: point t2) and writes it in the memory M17 (step S179).

The CPU reads out the optimum gain value determination reference value Vs from the memory M9 (step S180), subtracts the output value AP3 of the third amplifier 114 from the optimum gain value determination reference value Vs to obtain the difference ΔVs between the output value AP3 of the third amplifier 114 and the optimum gain value determination reference value Vs (step S181), and obtains the absolute value |ΔVs| (step S182). The obtained difference ΔVs is written in the memory M10. The absolute value |ΔVs| of the difference is written in the memory M11.

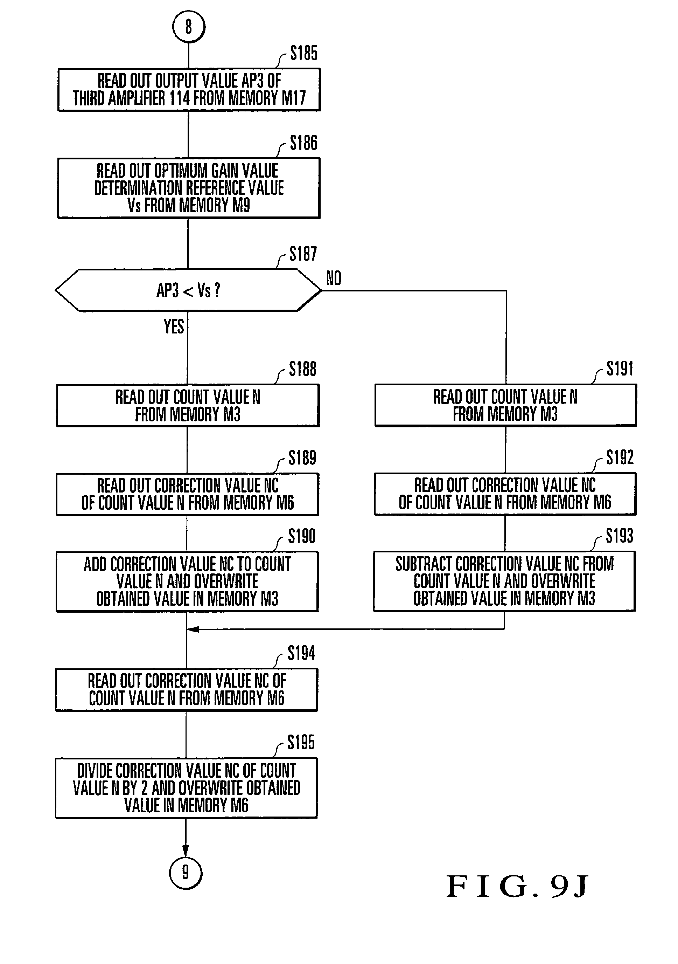

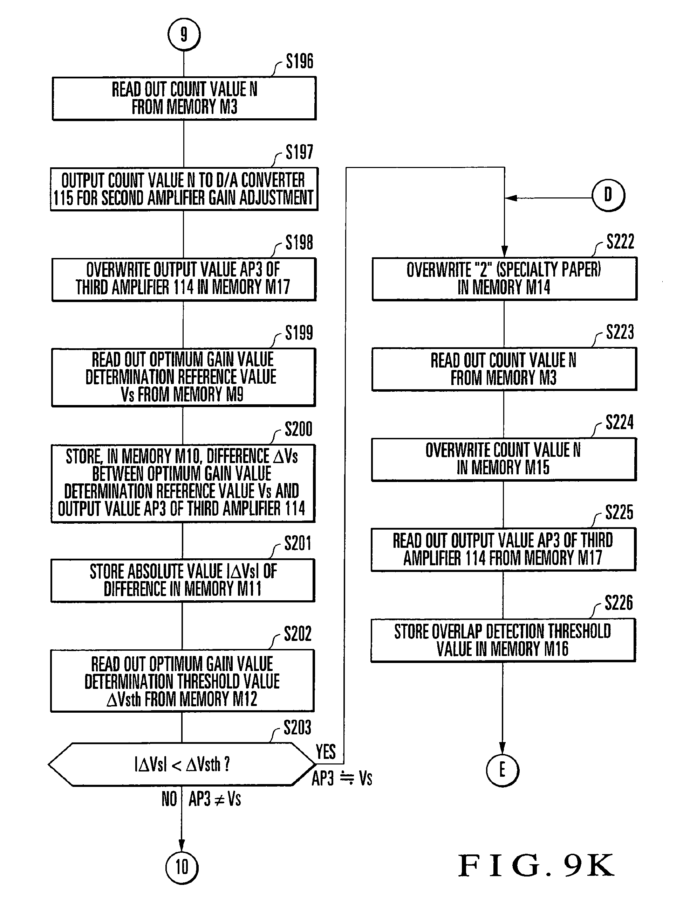

The CPU reads out the optimum gain value determination threshold value ΔVsth from the memory M12 (step S183) and compares it with the absolute value |ΔVs| of the difference (step S184). If |ΔVs| < ΔVsth does not hold (NO in step S184), the process advances to step S185 (Fig. 9J). If |ΔVs| < ΔVsth (YES in step S184), the process advances to step S222 (Fig. 9K).

In this example, |ΔVs| < ΔVsth does not hold, and therefore, the process advances to step S185. In this case, the CPU 101 reads out the output value AP3 of the third amplifier 114 at that time from the memory M17 (step S185), reads out the optimum gain value determination reference value Vs from the memory M9 (step S186), and compares the output value AP3 of the third amplifier 114 with the optimum gain value determination reference value Vs (step S187).

### [If AP3 < Vs]

If AP3 < Vs (YES in step S187), the CPU 101 reads out the count value N = 128 at that time from the memory M3 (step S188), reads out the correction value NC = 64 of the count value N at that time from the memory M6 (step S189), adds the correction value NC to the count value N to obtain N = 128 + 64 = 192, and overwrites the obtained count value N = 192 in the memory M3 (step S190). The CPU also reads out the correction value NC = 64 of the count value N at that time from the memory M6 (step S194), divides the correction value NC of the count value N by 2 to obtain NC = 64/2 = 32, and overwrites the obtained correction value NC = 32 in the memory M6 (step S195).

The CPU reads out the count value N = 192 from the memory M3 (Fig. 9K: step S196), and outputs the readout count value N = 192 to the D/A converter 115 for second amplifier gain adjustment (step S197) to set the gain GA of the second amplifier 113 to GA₁₉₂ (Fig. 15D: point t3). The CPU also receives the output value AP3 from the third amplifier 114 via the A/D converter 118 (Fig. 15C: point t3) and writes it in the memory M17 (step S198).

The CPU reads out the optimum gain value determination reference value Vs from the memory M9 (step S199), subtracts the output value AP3 of the third amplifier 114 from the optimum gain value determination reference value Vs to obtain the difference ΔVs between the output value AP3 of the third amplifier 114 and the optimum gain value determination reference value Vs (step S200), and obtains the absolute value |ΔVs| (step S201).

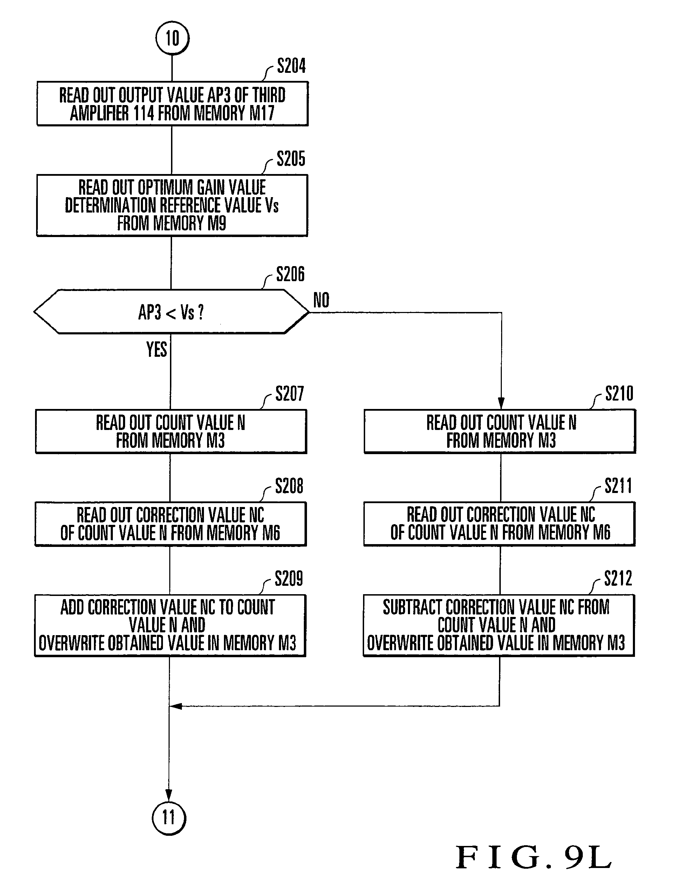

The CPU reads out the optimum gain value determination threshold value ΔVsth from the memory M12 (step S202) and compares it with the absolute value |ΔVs| of the difference (step S203). If |ΔVs| < ΔVsth does not hold (NO in step S203), the process advances to step S204 (Fig. 9L). If |ΔVs| < ΔVsth (YES in step S203), the process advances to step S222.

In this example, |ΔVs| < ΔVsth does not hold, and therefore, the process advances to step S204. In this case, the CPU 101 reads out the output value AP3 of the third amplifier 114 at that time from the memory M17 (step S204), reads out the optimum gain value determination reference value Vs from the memory M9 (step S205), and compares the output value AP3 of the third amplifier 114 with the optimum gain value determination reference value Vs (step S206).

In this example, AP3 ≤ Vs. In this case, the CPU 101 reads out the count value N = 192 at that time from the memory M3 (step S207), reads out the correction value NC = 32 of the count value N at that time from the memory M6 (step S208), adds the correction value NC to the count value N to obtain N = 192 + 32 = 224, and overwrites the obtained count value N = 224 in the memory M3 (step S209).

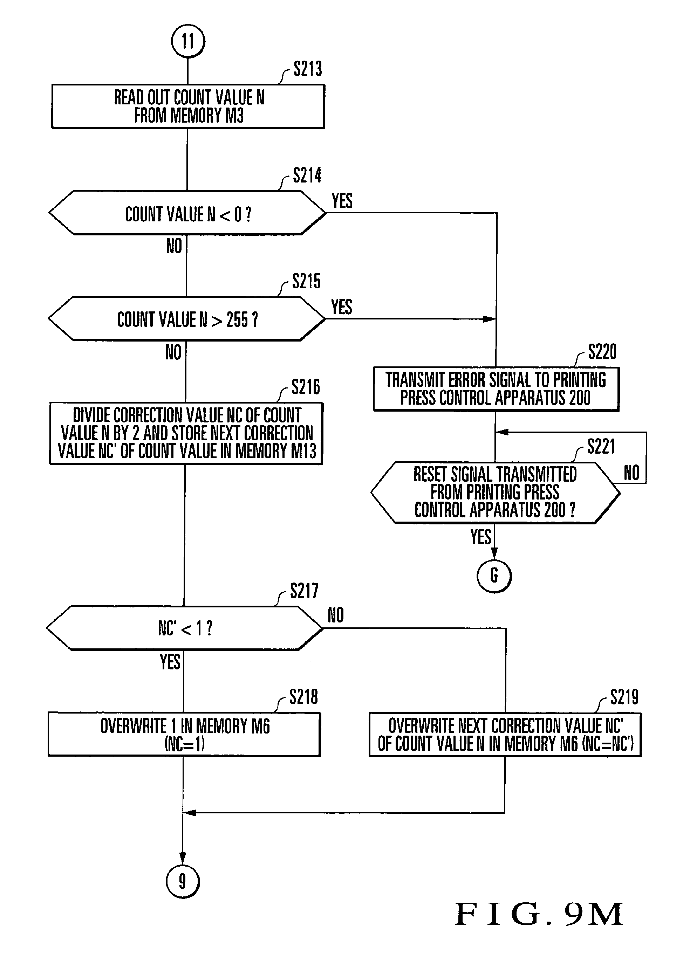

The CPU also reads out the count value N = 224 from the memory M3 (Fig. 9M: step S213), confirms that N < 0 does not hold (NO in step S214), confirms that N > 255 does not hold (NO in step S215), divides the correction value NC = 32 of the count value N at that time by 2 to obtain the next correction value NC' of the count value as NC' = 32/2 = 16, and overwrites the obtained next correction value NC' = 16 in the memory M13 (step S216).

The CPU checks whether the next correction value NC' of the count value N satisfies NC' < 1 (step S217). If NC' < 1, the CPU sets the correction value NC of the count value N in the memory M6 to "1" (step S218). If NC' < 1 does not hold, the CPU sets the correction value NC of the count value N in the memory M6 to the next correction value NC' of the count value N (step S219). In this case, since NC' = 16, the correction value NC of the count value N in the memory M6 is set to NC = 16.

The CPU reads out the count value N = 224 from the memory M3 (Fig. 9K: step S196), and outputs the readout count value N = 224 to the D/A converter 115 for second amplifier gain adjustment (step S197) to set the gain GA of the second amplifier 113 to GA₂₂₄ (Fig. 15D: point t4). The CPU also receives the output value AP3 from the third amplifier 114 via the A/D converter 118 (Fig. 15C: point t4) and writes it in the memory M17 (step S198).

The CPU reads out the optimum gain value determination reference value Vs from the memory M9 (step S199), subtracts the output value AP3 of the third amplifier 114 from the optimum gain value determination reference value Vs to obtain the difference ΔVs between the output value AP3 of the third amplifier 114 and the optimum gain value determination reference value Vs (step S200), and obtains the absolute value |ΔVs| (step S201). The CPU reads out the optimum gain value determination threshold value ΔVsth from the memory M12 (step S202) and compares it with the absolute value |ΔVs| of the difference (step S203). If |ΔVs| < ΔVsth does not hold (NO in step S203), the process advances to step S204 (Fig. 9L). If |ΔVs| < ΔVsth (YES in step S203), the process advances to step S222.

In this example, |ΔVs| < ΔVsth, and therefore, the process advances to step S222. In this case, the CPU 101 determines that the output value AP3 of the third amplifier 114 is almost equal to the optimum gain value determination reference value Vs (AP3 ≈ Vs), and writes "2" representing that the fed paper sheet 4 is specialty paper in the memory M14 (step S222). The CPU reads out the count value N = 224 at that time from the memory M3 (step S223) and writes it in the memory M15 as the optimum gain value NGsp (step S224). The CPU reads out the output value AP3 of the third amplifier 114 from the memory M17 (step S225), multiplies the readout output value AP3 of the third amplifier by 0.8 to obtain the overlap detection threshold value Vth, and writes it in the memory M16 (step S226).

In this example, when the gain GA of the second amplifier 113 is GA₂₂₄, |ΔVs| < ΔVsth. If |ΔVs| < ΔVsth does not hold (however, if AP3 < Vs continues), the gain GA increases while halving the correction value NC. In this case, the gain GA increases stepwise, like "GA₂₂₄" → "GA₂₄₀" → "GA₂₄₈" → "GA₂₅₂" → "GA₂₅₄" → "GA₂₅₅".

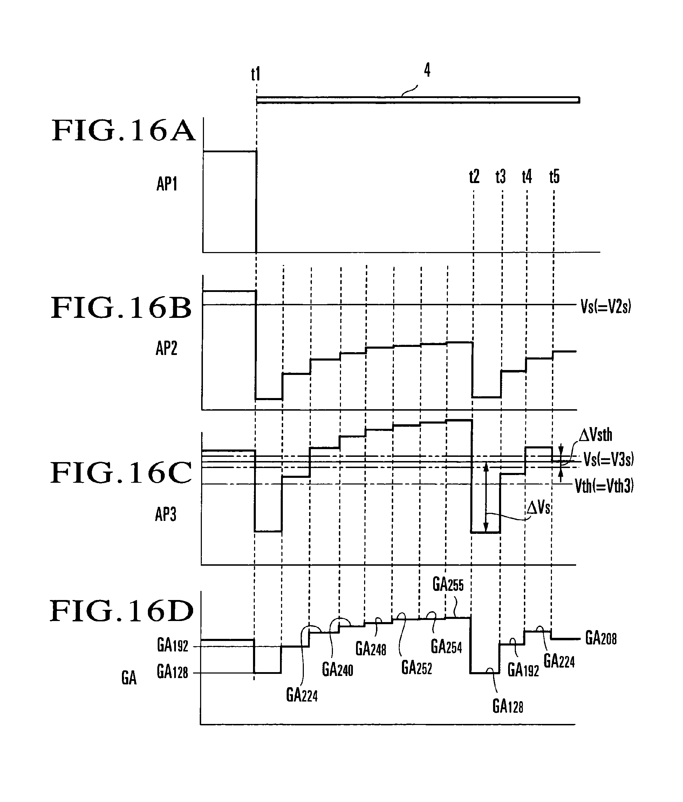

In this example, when the gain GA of the second amplifier 113 is GA₂₂₄, |ΔVs| < ΔVsth. In some cases, |ΔVs| < ΔVsth does not hold, and AP3 > Vs holds (Fig. 16C: point t4). In this case, the determination result in step S206 (Fig. 9L) is NO, and the process advances to step S210 to read out the count value N = 224 at that time from the memory M3 (step S210). The CPU reads out the correction value NC = 16 of the count value N at that time from the memory M6 (step S211), subtracts the correction value NC from the count value N to obtain N = 224 - 16 = 208, and sets the gain GA of the second amplifier 113 to GA₂₀₈ (Fig. 16D: point t5).

### [If AP3 ≥ Vs]

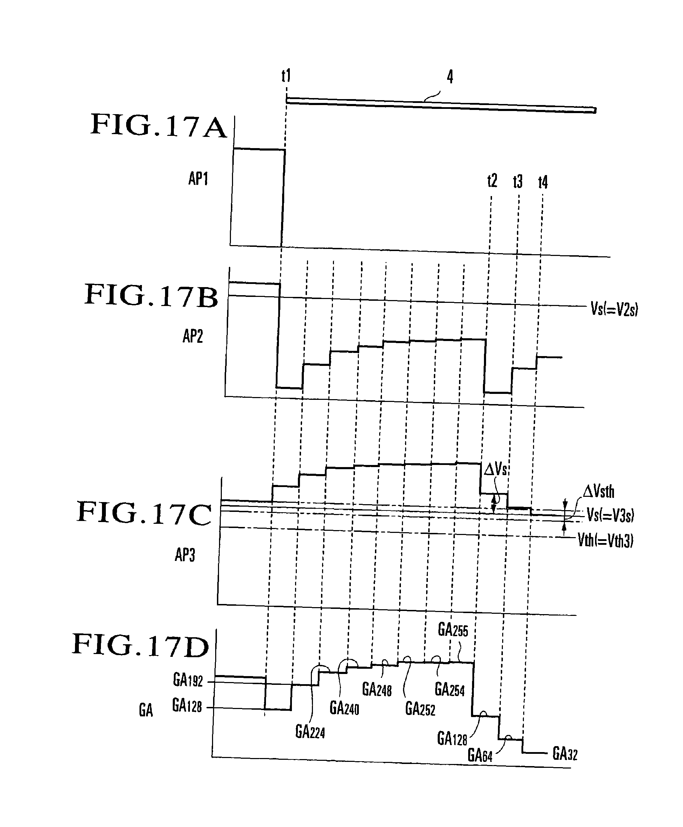

In step S187 (Fig. 9J), if AP3 ≥ Vs (Fig. 17C: point t2), the CPU 101 reads out the count value N = 128 at that time from the memory M3 (step S191), reads out the correction value NC = 64 of the count value N at that time from the memory M6 (step S192), subtracts the correction value NC from the count value N to obtain N = 128 - 64 = 64, and overwrites the obtained count value N = 64 in the memory M3 (step S193). The CPU also reads out the correction value NC = 64 of the count value N at that time from the memory M6 (step S194), divides the correction value NC of the count value N by 2 to obtain NC = 64/2 = 32, and overwrites the obtained correction value NC = 32 in the memory M6 (step S195).

The CPU reads out the count value N = 64 from the memory M3 (Fig. 9K: step S196), and outputs the readout count value N = 64 to the D/A converter 115 for second amplifier gain adjustment (step S197) to set the gain GA of the second amplifier 113 to GA₆₄ (Fig. 17D: point t3). The CPU also receives the output value AP3 from the third amplifier 114 via the A/D converter 118 (Fig. 17C: point t3) and writes it in the memory M17 (step S198).

The CPU reads out the optimum gain value determination reference value Vs from the memory M9 (step S199), subtracts the output value AP3 of the third amplifier 114 from the optimum gain value determination reference value Vs to obtain the difference ΔVs between the output value AP3 of the third amplifier 114 and the optimum gain value determination reference value Vs (step S200), and obtains the absolute value |ΔVs| (step S201). The CPU reads out the optimum gain value determination threshold value ΔVsth from the memory M12 (step S202) and compares it with the absolute value |ΔVs| of the difference (step S203). If |ΔVs| < ΔVsth does not hold (NO in step S203), the process advances to step S204 (Fig. 9L). If |ΔVs| < ΔVsth (YES in step S203), the process advances to step S222.

In this example, |ΔVs| < ΔVsth does not hold, and therefore, the process advances to step S204. In this case, the CPU 101 reads out the output value AP3 of the third amplifier 114 at that time from the memory M17 (step S204), reads out the optimum gain value determination reference value Vs from the memory M9 (step S205), and compares the output value AP3 of the third amplifier 114 with the optimum gain value determination reference value Vs (step S206).

In this example, AP3 > Vs. In this case, the CPU 101 reads out the count value N = 64 at that time from the memory M3 (step S210), reads out the correction value NC = 32 of the count value N at that time from the memory M6 (step S211), subtracts the correction value NC from the count value N to obtain N = 64 - 32 = 32, and overwrites the obtained count value N = 32 in the memory M3 (step S212). The CPU also reads out the count value N = 32 from the memory M3 (Fig. 9M: step S213), divides the correction value NC = 32 of the count value N at that time by 2 to obtain the next correction value NC' of the count value as NC' = 32/2 = 16, and overwrites the obtained next correction value NC' = 16 in the memory M13 (step S216).

The CPU checks whether the next correction value NC' of the count value N satisfies NC' < 1 (step S217). If NC' < 1, the CPU sets the correction value NC of the count value N in the memory M6 to "1" (step S218). If NC' < 1 does not hold, the CPU sets the correction value NC of the count value N in the memory M6 to the next correction value NC' of the count value N (step S219). In this case, since NC' = 16, the correction value NC of the count value N in the memory M6 is set to NC = 16.

The CPU reads out the count value N = 32 from the memory M3 (Fig. 9K: step S196), and outputs the readout count value N = 32 to the D/A converter 115 for second amplifier gain adjustment (step S197) to set the gain GA of the second amplifier 113 to GA₃₂ (Fig. 17D: point t4). The CPU also receives the output value AP3 from the third amplifier 114 via the A/D converter 118 (Fig. 17C: point t4) and writes it in the memory M17 (step S198).

The CPU reads out the optimum gain value determination reference value Vs from the memory M9 (step S199), subtracts the output value AP3 of the third amplifier 114 from the optimum gain value determination reference value Vs to obtain the difference ΔVs between the output value AP3 of the third amplifier 114 and the optimum gain value determination reference value Vs (step S200), and obtains the absolute value |ΔVs| (step S201). The CPU reads out the optimum gain value determination threshold value ΔVsth from the memory M12 (step S202) and compares it with the absolute value |ΔVs| of the difference (step S203). If |ΔVs| < ΔVsth does not hold (NO in step S203), the process advances to step S204 (Fig. 9L). If |ΔVs| < ΔVsth (YES in step S203), the process advances to step S222.

In this example, |ΔVs| < ΔVsth, and therefore, the process advances to step S222. In this case, the CPU 101 determines that the output value AP3 of the third amplifier 114 is almost equal to the optimum gain value determination reference value Vs (YES in step S203), and writes "2" representing that the fed paper sheet 4 is specialty paper in the memory M14 (step S222). The CPU reads out the count value N = 32 at that time from the memory M3 (step S223) and writes it in the memory M15 as the optimum gain value NGsp (step S224). The CPU reads out the output value AP3 of the third amplifier 114 from the memory M17 (step S225), multiplies the readout output value AP3 of the third amplifier by 0.8 to obtain the overlap detection threshold value Vth, and writes it in the memory M16 (step S226).

In this example, when the gain GA of the second amplifier 113 is GA₃₂, |ΔVs| < ΔVsth. If |ΔVs| < ΔVsth does not hold (however, if AP3 > Vs continues), the gain GA decreases while halving the correction value NC. In this case, the gain GA decreases stepwise, like "GA₃₂" → "GA₁₆" → "GA₈" → "GA₄" → "GA₂" → "GA₁" → "GA₀".

After the gain GA is set to "GA₁", the correction value NC' of the count value N in step S217 (Fig. 9M) is 0.5. Since YES in step S217, the process advances to step S218 to set the correction value NC of the count value to 1. If the count value N < 0 in step S214, the CPU transmits an error signal to the printing press control apparatus 200 (step S220).

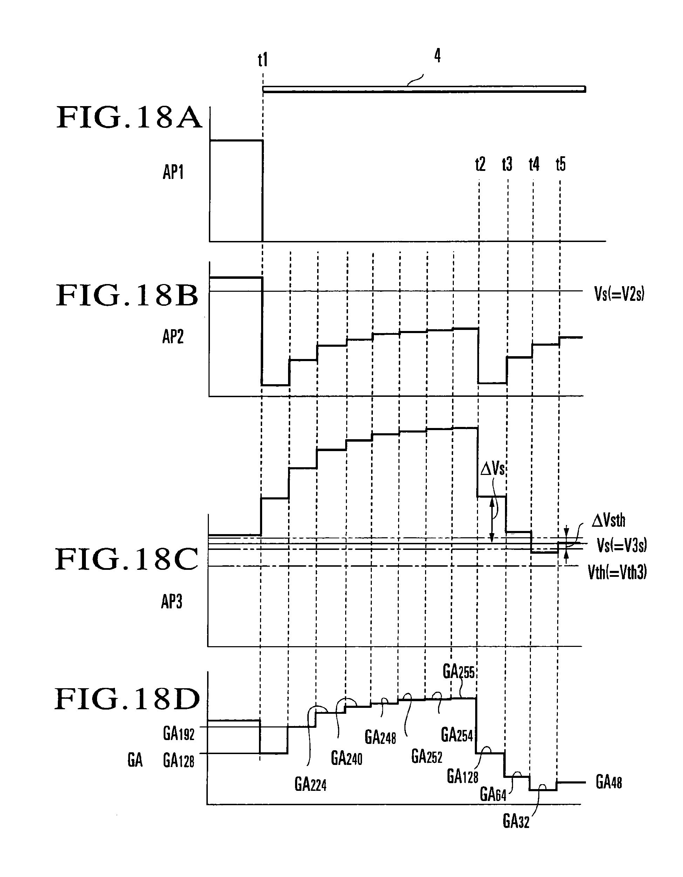

In this example, when the gain GA of the second amplifier 113 is GA₃₂, |ΔVs| < ΔVsth. In some cases, |ΔVs| < ΔVsth does not hold, and AP3 < Vs holds (Fig. 18C: point t4). In this case, the determination result in step S187 (Fig. 9J) is YES, and the process advances to step S188 to read out the count value N = 32 at that time from the memory M3 (step S188). The CPU reads out the correction value NC = 16 of the count value N at that time from the memory M6 (step S189), adds the correction value NC to the count value N to obtain N = 32 + 16 = 48 (step S190), and sets the gain GA of the second amplifier 113 to GA₄₈ (Fig. 18D: point t5).

If |ΔVs| < ΔVsth cannot hold even upon adjusting the gain GA, and the count value N > 255 (Fig. 9M: YES in step S215), the CPU 101 transmits an error signal to the printing press control apparatus 200, like when the count value N < 0 (step S220).

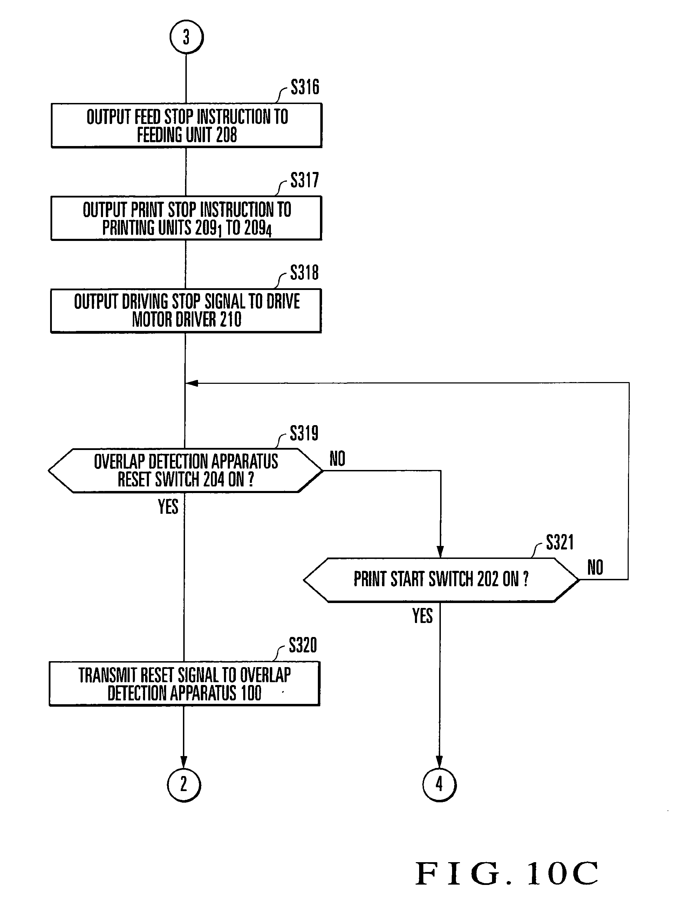

Upon receiving the error signal from the overlap detection apparatus 100 (Fig. 10A: YES in step S305), the CPU 201 of the printing press control apparatus 200 outputs a feed stop instruction to the feeding unit 208 (Fig. 10C: step S316) to stop paper feed from the feeding unit 208 to the printing press. The CPU also outputs a print stop instruction to the printing units 209₁ to 209₄ (step S317) to cause them to stop printing on paper sheets. The CPU also outputs a driving stop signal to the drive motor driver 210 (step S318) to stop the printing press.

When the overlap detection apparatus reset switch 204 is turned on (YES in step S319), the CPU 201 of the printing press control apparatus 200 transmits a reset signal to the overlap detection apparatus 100 (step S320). When the print start switch 202 is turned on (YES in step S321), the process returns to step S302 (Fig. 10A) to resume the operation of the printing press.

Upon receiving the reset signal from the printing press control apparatus 200 (Fig. 9H: YES in step S170, Fig. 9M: YES in step S221), the CPU 101 of the overlap detection apparatus 100 returns to step S101 (Fig. 9A) to execute the above-described series of processing operations again.

### [Overlap Detection]

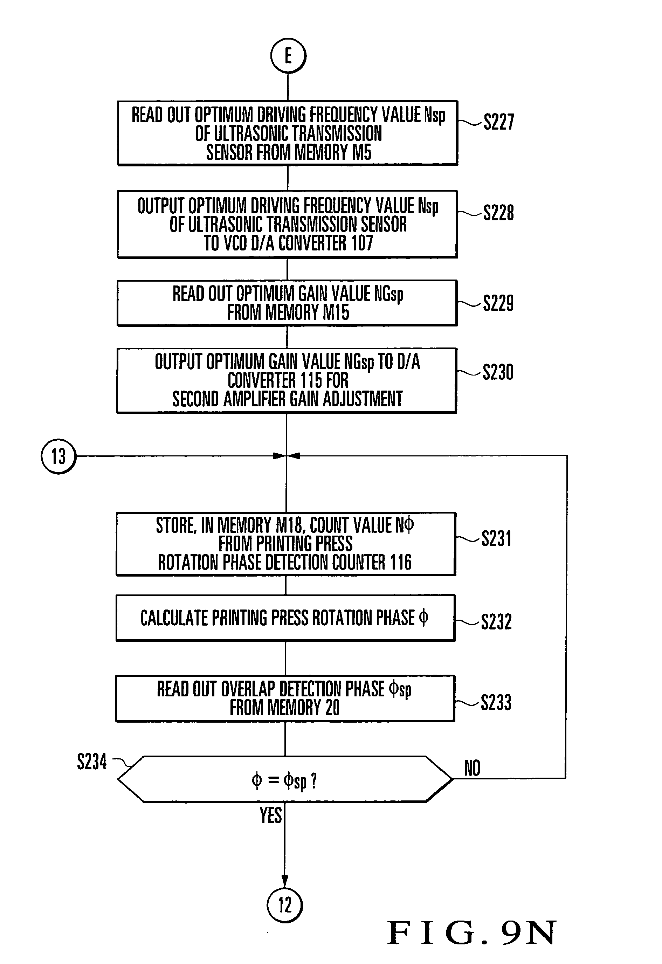

After executing the process in steps S171 to S175 (Fig. 9F) or the process in steps S222 to S226 (Fig. 9K), i.e., deciding the overlap detection monitor output and gain, the CPU 101 of the overlap detection apparatus 100 reads out the optimum driving frequency value Nsp of the ultrasonic transmission sensor from the memory M5 (Fig. 9N: step S227) and outputs it to the VCO D/A converter 107 (step S228). The driving frequency f from the ultrasonic oscillation circuit 109 to the ultrasonic transmission sensor 110 is set to fNsp.

The CPU 101 reads out the optimum gain value NGsp from the memory M15 (step S229) and outputs it to the D/A converter 115 for second amplifier gain adjustment (step S230). A gain GA_{NGsp} is set in the second amplifier 113 as the overlap detection gain GAsp.

The CPU 101 reads out the count value Nφ from the printing press rotation phase detection counter 116 (step S231), obtains the printing press rotation phase φ based on the readout count value Nφ (step S232), reads out an overlap detection phase φsp from the memory M20 (step S233), and compares the printing press rotation phase φ with the overlap detection phase φsp (step 5234).

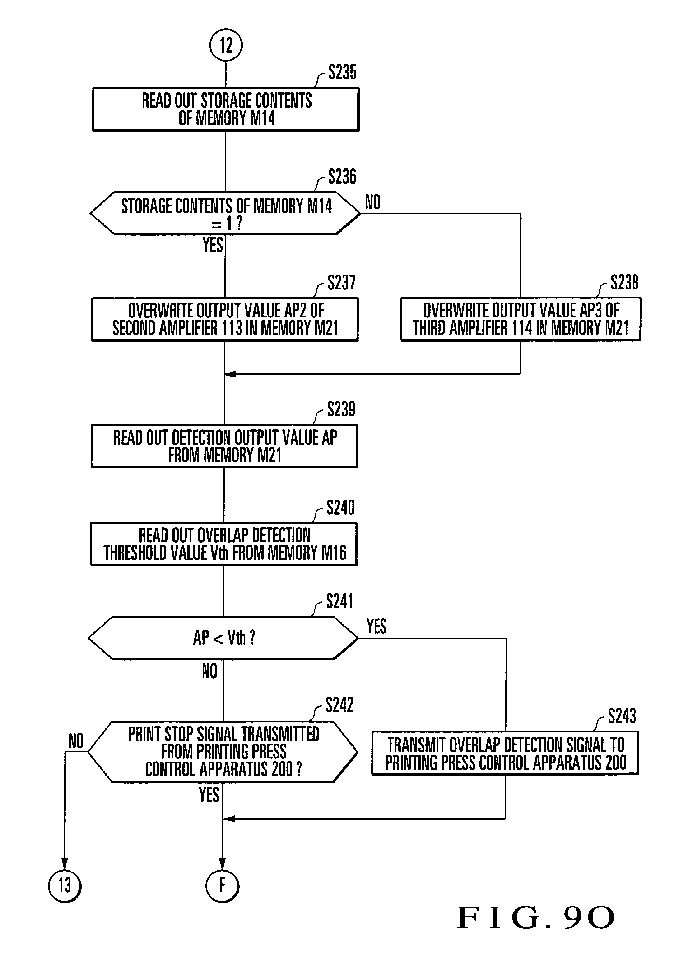

The process in steps S231 to S234 is repeated, and if the printing press rotation phase φ equals the overlap detection phase φsp (YES in step S234), the CPU reads out the storage contents from the memory M14 (Fig. 9O: step S235). If the storage contents of the memory M14 represents "1" (plain paper) (YES in step S236), the CPU receives the output value AP2 from the second amplifier 113 via the A/D converter 119 and writes it in the memory M21 as the detection output value AP (step S237). If the storage contents of the memory M14 represent "2" (specialty paper) (NO in step S236), the CPU receives the output value AP3 from the third amplifier 114 via the A/D converter 118 and writes it in the memory M21 as the detection output value AP (step S238).

The CPU reads out the detection output value AP from the memory M21 (step S239) and also reads out an overlap detection threshold value Vth stored in the memory M16 (step S240). If the detection output value AP < Vth (YES in step S241), the CPU transmits an overlap detection signal to the printing press control apparatus 200 (step S243). If the detection output value AP < Vth does not hold (NO in step S241), the process returns from step S242 to step S231 (Fig. 9N) to repeat the same processing operation as described above.

If a print stop signal from the printing press control apparatus 200 is confirmed in step S242, the process returns to step S119 (Fig. 9C) to wait for a print start signal from the printing press control apparatus 200.

Upon receiving the overlap detection signal from the overlap detection apparatus 100 (Fig. 10B: YES in step S306, YES in step S308), the CPU 201 of the printing press control apparatus 200 outputs a feed stop instruction to the feeding unit 208 (step S314) to stop paper feed from the feeding unit 208 to the printing press. The CPU also outputs a print stop instruction to the printing units 209₁ to 209₄ (step S315) to cause them to stop printing on paper sheets. The CPU also outputs a driving stop signal to the drive motor driver 210 (step S313) to stop the printing press.

The overlap detection signal confirmation in step S308 is repeatedly executed after the output of the print start instruction to the printing units 209₁ to 209₄ (step S307). If the print stop switch 203 is turned on during this repetitive execution (YES in step S309), the CPU 201 of the printing press control apparatus 200 outputs a feed stop instruction to the feeding unit 208 (step S310), transmits a print stop signal to the overlap detection apparatus 100 (step S311), outputs a print stop instruction to the printing units 209₁ to 209₄ (step S312), and outputs a driving stop signal to the drive motor driver 210 (step S313).

### [Functions Implemented by CPU]

Fig. 20 shows functional blocks implemented by the CPU which operates in accordance with the overlap detection program. The CPU 101 implements at least an overlap detection monitor output & amplification factor decision unit 130 and an overlap detection unit 134.

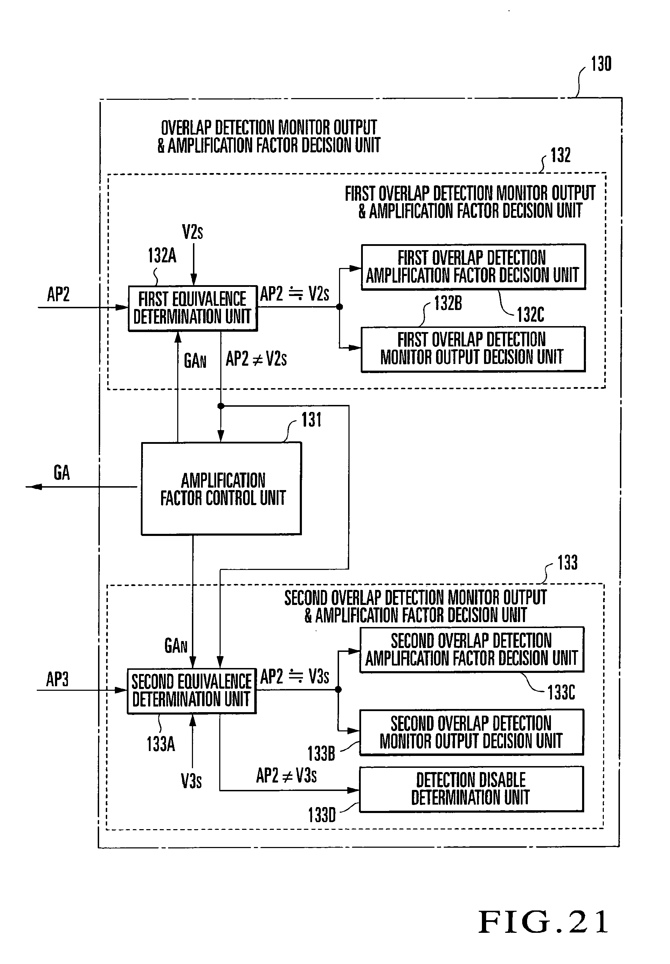

As shown in Fig. 21, the overlap detection monitor output & amplification factor decision unit 130 comprises an amplification factor control unit 131, first overlap detection monitor output & amplification factor decision unit 132, and second overlap detection monitor output & amplification factor decision unit 133.

The amplification factor control unit 131 controls the gain GA of the second amplifier 113. The amplification factor control unit 131 performs the processes in, e.g., steps S126 and S127, S137 to S146, S156 to S168, S177 and S178, S188 to S197, and S207 to S219. As shown in Fig. 22, the amplification factor control unit 131 comprises a change width control unit 131A and a change direction control unit 131B.

The change width control unit 131A repeatedly changes the gain GA of the second amplifier 113 while reducing the change width. The change width control unit 131A performs the processes in, e.g., steps S143 and S144, S156 to S161, S165 to S168, S194 and S195, S207 to S212, and S216 to S219.

When the magnitude relationship between the output value AP2 of the second amplifier 113 and the optimum gain value determination reference value (first set value) Vs, or the magnitude relationship between the output value AP3 of the third amplifier 114 and the optimum gain value determination reference value (second set value) Vs has changed due to the change of the gain GA of the second amplifier 113, the change direction control unit 131B changes the gain GA of the second amplifier 113 in a direction different from that of the previous time. For example, when AP2 < Vs has changed to AP2 > Vs, the change direction control unit 131B changes the direction of the gain GA from an increasing direction to a decreasing direction. The change direction control unit 131B performs the processes in, e.g., steps S155 to S161, and S206 to S212.

As shown in Fig. 21, the first overlap detection monitor output & amplification factor decision unit 132 comprises a first equivalence determination unit 132A, first overlap detection monitor output decision unit 132B, and first overlap detection amplification factor decision unit 132C.

Every time the amplification factor control unit 131 changes the gain GA of the second amplifier 113, the first equivalence determination unit 132A determines whether the output value AP2 of the second amplifier 113 is almost equal to the optimum gain value determination reference value Vs. If the absolute value of the difference between the output value AP2 of the second amplifier 113 and the optimum gain value determination reference value Vs is smaller than the optimum gain value determination threshold value (first threshold value) ΔVsth, the first equivalence determination unit 132A determines that the output value AP2 of the second amplifier 113 is almost equal to the optimum gain value determination reference value Vs. The first equivalence determination unit 132A performs the processes in, e.g., steps S128 to S133, and S147 to S152.

When the amplification factor control unit 131 adjusts the gain GA of the second amplifier 113, and the output value AP2 of the second amplifier 113 becomes almost equal to the optimum gain value determination reference value Vs while one fed paper sheet 4 is sandwiched between the ultrasonic transmission sensor 110 and the ultrasonic reception sensor 111, the first overlap detection monitor output decision unit 132B decides the output from the second amplifier 113 as the overlap detection monitor output. The first overlap detection monitor output decision unit 132B performs the process in, e.g., step S171.

When the first overlap detection monitor output decision unit 132B decides the output from the second amplifier 113 as the overlap detection monitor output, the first overlap detection amplification factor decision unit 132C decides, as the overlap detection gain GAsp, the gain GA of the second amplifier 113 when the output value AP2 of the second amplifier 113 has become almost equal to the optimum gain value determination reference value Vs. The first overlap detection amplification factor decision unit 132C performs the processes in, e.g., steps S172 and S173.

As shown in Fig. 21, the second overlap detection monitor output & amplification factor decision unit 133 comprises a second equivalence determination unit 133A, second overlap detection monitor output decision unit 133B, and second overlap detection amplification factor decision unit 133C.

Every time the amplification factor control unit 131 changes the gain GA of the second amplifier 113, the second equivalence determination unit 133A determines whether the output value AP3 of the third amplifier 114 is almost equal to the optimum gain value determination reference value Vs. If the absolute value of the difference between the output value AP3 of the third amplifier 114 and the optimum gain value determination reference value Vs is smaller than the optimum gain value determination threshold value (second threshold value) ΔVsth, the second equivalence determination unit 133A determines that the output value AP3 of the third amplifier 114 is almost equal to the optimum gain value determination reference value Vs. The second equivalence determination unit 133A performs the processes in, e.g., steps S179 to S184, and S198 to S203.

When the amplification factor control unit 131 adjusts the gain GA of the second amplifier 113, and the output value AP3 of the third amplifier 114 becomes almost equal to the optimum gain value determination reference value Vs while one fed paper sheet 4 is sandwiched between the ultrasonic transmission sensor 110 and the ultrasonic reception sensor 111, the second overlap detection monitor output decision unit 133B decides the output from the third amplifier 114 as the overlap detection monitor output. The second overlap detection monitor output decision unit 133B performs the process in, e.g., step S222.

When the second overlap detection monitor output decision unit 133B decides the output from the third amplifier 114 as the overlap detection monitor output, the second overlap detection amplification factor decision unit 133C decides, as the overlap detection gain GAsp, the gain GA of the second amplifier 113 when the output value AP3 of the third amplifier 114 has become almost equal to the optimum gain value determination reference value Vs. The second overlap detection amplification factor decision unit 133C performs the processes in, e.g., steps S223 and S224.

Based on the output from the second or third amplifier 113 or 114 decided as the overlap detection monitor output by the first or second overlap detection monitor output decision unit 132B or 133B, the overlap detection unit 134 detects overlap of the fed paper sheets 4 which pass between the ultrasonic transmission sensor 110 and the ultrasonic reception sensor 111. The overlap detection unit 134 performs the processes in, e.g., steps S227 to S243. At the time of overlap detection, the amplification factor control unit 131 sets, in the second amplifier 113, the overlap detection gain GAsp decided by the first or second overlap detection amplification factor decision unit 132C or 133C.

In the present invention, the amplification factor of the second amplifier is changed while sandwiching one sheet between the ultrasonic transmitter and the ultrasonic receiver. The output of the second amplifier is decided as the sheet overlap detection monitor output if the output value from the second amplifier is recognized to be almost equal to the first set value defined in advance. For example, if the amplification factor GA of the second amplifier is raised stepwise from GA₀ to GA₂₅₅, and the output value AP2 from the second amplifier has become almost equal to the first set value (V2s) halfway (AP2 ≈ V2s), the output from the second amplifier is decided as the overlap detection monitor output.

On the other hand, if the output value from the second amplifier is not recognized to be almost equal to the first set value, but the output value from the third amplifier is recognized to be almost equal to the second set value defined in advance, the output from the third amplifier is decided as the overlap detection monitor output. For example, if the amplification factor GA of the second amplifier is raised stepwise from GA₀ to GA₂₅₅, and AP2 ≈ V2s does not hold, the amplification factor GA of the second amplifier is raised again stepwise from GA₀ to GA₂₅₅. If the output value AP3 from the third amplifier becomes almost equal to the second set value (V3s) halfway (AP3 ≈ V3s), the output from the third amplifier is decided as the overlap detection monitor output.

When the output from the second amplifier is decided as the overlap detection monitor output, the amplification factor of the second amplifier at that time is decided as the sheet overlap detection amplification factor. When the output from the third amplifier is decided as the overlap detection monitor output, the amplification factor of the second amplifier at that time is decided as the overlap detection amplification factor.

In changing the amplification factor of the second amplifier, the amplification factor GA need not always be raised stepwise from GA₀ to GA₂₅₅. For example, the amplification factor GA is set to GA₁₂₈ first. If the output from the second amplifier at that time is smaller than the first set value, the amplification factor GA is raised to GA₁₉₂. The amplification factor GA may be narrowed down in this way until the output value from the second amplifier almost equals the first set value.

Alternatively, the output from the second amplifier and that from the third amplifier are stored while raising the amplification factor GA of the second amplifier stepwise from GA₀ to GA₂₅₅. Then, the output value from the second amplifier and that from the third amplifier corresponding to each of the amplification factors GA₀ to GA₂₅₅ are observed. If the output value from the second amplifier is recognized to be almost equal to the first set value V2s, the output from the second amplifier is decided as the sheet overlap detection monitor output. If the output value from the second amplifier is not recognized to be almost equal to the first set value V2s, but the output value from the third amplifier is recognized to be almost equal to the second set value V3s, the output from the third amplifier is decided as the sheet overlap detection monitor output. This obviates changing the amplification factor GA of the second amplifier again and speeds up the processing.

The first set value and the second set value may be different or the same. The first threshold value and the second threshold value may also be different or the same. The sheets as the overlap detection target are not limited to the fed paper sheets to the printing press.

According to the present invention, it is possible to accurately perform overlap detection of specialty paper having a high ultrasonic wave attenuation factor by using the output from the third amplifier as the overlap detection monitor output.

## Claims

1. A sheet overlap detection apparatus **characterized by** comprising:
an ultrasonic transmitter (1, 110) which transmits an ultrasonic wave;
an ultrasonic receiver (2, 111) which receives the ultrasonic wave from said ultrasonic transmitter;
a first amplifier (AMP1, 112) which amplifies an output from said ultrasonic receiver;
a second amplifier (AMP2, 113) which is configured to freely change an amplification factor and amplifies an output from said first amplifier;
a third amplifier (AMP3, 114) which amplifies an output from said second amplifier;
amplification factor control means (31, 131) for changing the amplification factor of said second amplifier;
first overlap detection monitor output decision means (32B, 132B) for deciding the output from said second amplifier as a sheet overlap detection monitor output when said amplification factor control means adjusts the amplification factor of said second amplifier, and an output value of said second amplifier has become almost equal to a first set value while one sheet is sandwiched between said ultrasonic transmitter and said ultrasonic receiver;
second overlap detection monitor output decision means (33B, 133B) for deciding an output from said third amplifier as a sheet overlap detection monitor output when said amplification factor control means adjusts the amplification factor of said second amplifier, and the output value of said second amplifier has not become almost equal to the first set value, but an output value of said third amplifier has become almost equal to a second set value while one sheet is sandwiched between said ultrasonic transmitter and said ultrasonic receiver; and
overlap detection means (34, 134) for detecting, based on the output from one of said second amplifier and said third amplifier, overlap of sheets which pass between said ultrasonic transmitter and said ultrasonic receiver, the output being decided as the sheet overlap detection monitor output by one of said first overlap detection monitor output decision means and said second overlap detection monitor output decision means.

2. An apparatus according to claim 1, further comprising:
first amplification factor decision means (32C, 132C) for deciding, as a sheet overlap detection amplification factor, the amplification factor of said second amplifier when said first overlap detection monitor output decision means has decided the output from said second amplifier as the sheet overlap detection monitor output, and the output value of said second amplifier has become almost equal to the first set value; and
second amplification factor decision means (33C, 133C) for deciding, as a sheet overlap detection amplification factor, the amplification factor of said second amplifier when said second overlap detection monitor output decision means has decided the output from said third amplifier as the sheet overlap detection monitor output, and the output value of said third amplifier has become almost equal to the second set value,
wherein in sheet overlap detection, said amplification factor control means sets, in said second amplifier, the sheet overlap detection amplification factor decided by one of said first amplification factor decision means and said second amplification factor decision means.

3. An apparatus according to claim 1, wherein said amplification factor control means comprises:
change width control means (131A) for repeatedly changing the amplification factor of said second amplifier while reducing a change width; and
change direction control means (131B) for changing the amplification factor of said second amplifier in a direction different from that of previous time when a magnitude relationship between the first set value and the output value of said second amplifier, or the magnitude relationship between the second set value and the output value of said third amplifier has changed due to the change of the amplification factor of said second amplifier.

4. An apparatus according to claim 1, further comprising:
first equivalence determination means (32A, 132A) for determining that the output value of said second amplifier has become almost equal to the first set value when an absolute value of a difference between the first set value and the output value of said second amplifier is smaller than a first threshold value; and
second equivalence determination means (33A, 133A) for determining that the output value of said third amplifier has become almost equal to the second set value when an absolute value of a difference between the second set value and the output value of said third amplifier is smaller than a second threshold value.

5. A sheet overlap detection method **characterized by** comprising the steps of:
causing an ultrasonic transmitter (1, 110) to transmit an ultrasonic wave;
causing an ultrasonic receiver (2, 111) to receive the ultrasonic wave from the ultrasonic transmitter;
causing a first amplifier (AMP1, 112) to amplify an output from the ultrasonic receiver;
causing a second amplifier (AMP2, 113) to amplify an output from the first amplifier;
causing a third amplifier (AMP3, 114) to amplify an output from the second amplifier;
adjusting an amplification factor of the second amplifier;
deciding the output from the second amplifier as a sheet overlap detection monitor output when the amplification factor of the second amplifier is adjusted, and an output value of the second amplifier has become almost equal to a first set value while one sheet is sandwiched between the ultrasonic transmitter and the ultrasonic receiver;
deciding an output from the third amplifier as a sheet overlap detection monitor output when the amplification factor of the second amplifier is adjusted, and the output value of the second amplifier has not become almost equal to the first set value, but an output value of the third amplifier has become almost equal to a second set value while one sheet is sandwiched between the ultrasonic transmitter and the ultrasonic receiver; and
detecting, based on the output from one of the second amplifier and the third amplifier, overlap of sheets which pass between the ultrasonic transmitter and the ultrasonic receiver, the output being decided as the sheet overlap detection monitor output.

6. A method according to claim 5, further comprising the steps of:
deciding, as a sheet overlap detection amplification factor, the amplification factor of the second amplifier when the output from the second amplifier is decided as the sheet overlap detection monitor output, and the output value of the second amplifier has become almost equal to the first set value; and
deciding, as a sheet overlap detection amplification factor, the amplification factor of the second amplifier when the output from the third amplifier is decided as the sheet overlap detection monitor output, and the output value of the third amplifier has become almost equal to the second set value,
wherein the detecting step comprises the step of setting the sheet overlap detection amplification factor in the second amplifier.

7. A method according to claim 5, wherein the adjusting step comprises the steps of:
repeatedly changing the amplification factor of the second amplifier while reducing a change width; and
changing the amplification factor of the second amplifier in a direction different from that of previous time when a magnitude relationship between the first set value and the output value of the second amplifier, or the magnitude relationship between the second set value and the output value of the third amplifier has changed due to the change of the amplification factor of the second amplifier.

8. A method according to claim 5, further comprising the steps of:
determining that the output value of the second amplifier has become almost equal to the first set value when an absolute value of a difference between the first set value and the output value of the second amplifier is smaller than a first threshold value; and
determining that the output value of the third amplifier has become almost equal to the second set value when an absolute value of a difference between the second set value and the output value of the third amplifier is smaller than a second threshold value.
